(19) Europäisches Patentamt
European Patent Office
Office européen des brevets

(11) EP 4 668 175 A1

(12) **EUROPEAN PATENT APPLICATION**
published in accordance with Art. 153(4) EPC

(43) Date of publication:
**24.12.2025 Bulletin 2025/52**

(21) Application number: **23929396.2**

(22) Date of filing: **31.03.2023**

(51) International Patent Classification (IPC):
***G06N 20/00*** *(2019.01)*

(52) Cooperative Patent Classification (CPC):
**G06N 20/00**

(86) International application number:
**PCT/CN2023/085467**

(87) International publication number:
**WO 2024/197810 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
- **ZHANG, Gongzheng**
  **Shenzhen, Guangdong 518129 (CN)**
- **XU, Chen**
  **Shenzhen, Guangdong 518129 (CN)**
- **WANG, Jian**
  **Shenzhen, Guangdong 518129 (CN)**
- **LI, Rong**
  **Shenzhen, Guangdong 518129 (CN)**

(74) Representative: **Goddar, Heinz J. et al**
**Boehmert & Boehmert**
**Anwaltspartnerschaft mbB**
**Pettenkoferstrasse 22**
**80336 München (DE)**

# (54) DATA PROCESSING METHOD, MODEL TRAINING METHOD, AND RELATED DEVICE

(57) A data processing method, a model training method, and a related device are provided, to apply an artificial intelligence technology to the communication field. The method includes: obtaining a value of T, where T represents a quantity of pieces of subdata included in output data of a first machine learning model; and inputting first data into the first machine learning model to obtain second data generated by the first machine learning model, where the second data includes the T pieces of subdata, the first machine learning model includes one or more modules, and one piece of subdata is obtained each time a module in the first machine learning model is invoked at least once. A quantity of times of invoking the module in the first machine learning model may be flexibly adjusted based on the value of T, to generate the T pieces of subdata. Therefore, the first machine learning model can be compatible with a plurality of values of T, and there is no need to store a plurality of machine learning models, so that storage space overheads are reduced.

A first apparatus obtains a value of T, where T is an integer greater than or equal to 1, and T represents a quantity of pieces of subdata included in output data of a first machine learning model
301
The first apparatus inputs first data into the first machine learning model to obtain second data generated by the first machine learning model, where the second data includes the T pieces of subdata, the first machine learning model includes one or more modules, and one of the T pieces of subdata is obtained each time a module in the first machine learning model is invoked at least once
302

FIG. 3

EP 4 668 175 A1

Processed by Luminess, 75001 PARIS (FR)

## Description

## TECHNICAL FIELD

This application relates to the communication field, and in particular, to a data processing method, a model training method, and a related device.

## BACKGROUND

Artificial intelligence (Artificial Intelligence, AI) is a theory, a method, a technology, and an application system that simulate and extend human intelligence by using a digital computer or a machine controlled by a digital computer, to perceive an environment, obtain knowledge, and use the knowledge to obtain an optimal result. Artificial intelligence is to study design principles and implementation methods of various intelligent machines, so that the machines have perception, inference, and decision-making functions.

Applying an artificial intelligence technology to the wireless communication field is an application manner of artificial intelligence, for example, performing modulation, encoding, or another task by using a machine learning model. For example, to-be-processed data may be input into the machine learning model, to obtain processed data that is output by the model. The processed data includes T pieces of subdata, and T is an integer greater than or equal to 1.

However, a value of T may be flexibly determined based on an actual situation. In a related technology, a quantity of output channels of each machine learning model is fixed. As a result, the machine learning model can output only a fixed quantity of pieces of subdata. When T changes, another machine learning model is needed for processing. In this case, a plurality of machine learning models need to be stored, resulting in high storage space overheads. Therefore, a machine learning model that can be compatible with a plurality of values of T needs to be developed urgently.

## SUMMARY

Embodiments of this application provide a data processing method, a model training method, and a related device. One piece of subdata can be obtained each time a module in a first machine learning model is invoked at least once, and a quantity of times of invoking the module in the first machine learning model may be flexibly adjusted based on a value of T, to generate T pieces of subdata. Therefore, the first machine learning model can be compatible with a plurality of values of T, and there is no need to store a plurality of machine learning models, so that storage space overheads are reduced.

A first aspect of this application provides a data processing method, to apply an artificial intelligence technology to the communication field. The method is applied to a side of a first apparatus, and the first apparatus may be a device, or may be a component (for example, a chip or a chip system) that can be configured in a device. The method includes: The first apparatus obtains a value of T, where T represents a quantity of pieces of subdata included in output data of a first machine learning model, and T is an integer greater than or equal to 1; and the first apparatus inputs first data into the first machine learning model to obtain second data generated by the first machine learning model, where the second data includes the T pieces of subdata. The first machine learning model includes one or more modules, and one piece of subdata is obtained each time a module in the first machine learning model is invoked at least once. For example, one module or a plurality of modules in the first machine learning model may be invoked each time. In this implementation, one piece of subdata can be obtained each time the module in the first machine learning model is invoked at least once, and after the value of T is obtained, a quantity of times of invoking the module in the first machine learning model may be flexibly adjusted based on the value of T, to generate the T pieces of subdata. Therefore, the first machine learning model can be compatible with a plurality of values of T, and there is no need to store a plurality of machine learning models, so that storage space overheads are reduced.

In a possible implementation, a function of the first machine learning model includes any one or combination of the following: encoding, modulation, or reference signal generation. For example, if the function of the first machine learning model is encoding, the first data is data that needs to be encoded, and the second data is encoded data. For another example, if the function of the first machine learning model is modulation, the first data is data that needs to be modulated, and the second data is modulated data. For another example, if the function of the first machine learning model is reference signal generation, the first data may be index numbers of a plurality of reference signals, and the second data may be the reference signals. For another example, if the function of the first machine learning model is encoding and modulation, the first data is data that needs to be encoded and modulated, and the second data is encoded and modulated data.

In this implementation, a plurality of functions of the first machine learning model are provided, application scenarios of this solution are extended, and implementation flexibility of this solution is improved.

In a possible implementation, the plurality of modules in the first machine learning model include a first module and at least one second module, and that the first apparatus inputs the first data into the first machine learning model to obtain the second data output by the first machine learning model includes: The first apparatus inputs the first data into the first module to obtain first subdata generated by the first module, where the first subdata is one of the T pieces of subdata; and inputs first feature information of the first data into the second module to obtain second subdata generated by the second module, where the second subdata is one of the T pieces of subdata. The first feature information includes feature information generated when a module in the first machine learning model is invoked last time for data processing. For example, the first feature information may be feature information generated when the first module in the first machine learning model is invoked last time for data processing, or may be feature information generated when the second module in the first machine learning model is invoked last time for data processing.

In this implementation, the first machine learning model includes the first module and the at least one second module. An input of the first module in the first machine learning model is the entire first data, and an input of the second module is the feature information obtained when the module in the first machine learning model is invoked last time. In this case, when the second module is invoked for the first time, an input is feature information obtained when the entire first data is processed by using the first module. Therefore, the entire first data is referenced for feature information that is input into the second module each time. In other words, when each of the T pieces of subdata is generated, information about the entire first data is referenced. This helps obtain second data with better performance. In addition, one piece of second subdata in the T pieces of subdata can be obtained each time the second module is invoked once. This helps quickly obtain the T pieces of subdata included in the second data.

In a possible implementation, the plurality of modules in the first machine learning model include a first module and at least one third module, and that the first apparatus inputs the first data into the first machine learning model to obtain the second data output by the first machine learning model includes: The first apparatus inputs the first data into the first module to generate first subdata by using the first module, where the first subdata is one of the T pieces of subdata, and a process of generating the first subdata by using the first module includes performing feature extraction on the first data, that is, feature information of the first data can be obtained in the process of generating the first subdata by using the first module; and the first apparatus invokes the third module a plurality of times to obtain third subdata generated by the third module, where the third subdata is one of the T pieces of subdata, an input of the third module includes the feature information of the first data, and the feature information of the first data is updated a plurality of times in a process of invoking the third module a plurality of times. For example, when the first apparatus invokes the third module for the first time, feature information that is of the first data and that is input into the third module is obtained in a process in which the first module generates the first subdata. When the first apparatus invokes the third module for the second time and later, feature information that is of the first data and that is input into the third module is obtained in a process in which the third module is invoked last time.

In this implementation, only after the third module is invoked a plurality of times to update the feature information of the first data a plurality of times, one piece of third subdata is generated based on final updated feature information of the first data. This helps more thoroughly understand the first data after the first data is updated a plurality of times, so that subdata with better performance is generated.

In a possible implementation, that the first apparatus inputs the first feature information into the second module to obtain the second subdata generated by the second module includes: The first apparatus performs linear transformation on the first feature information by using the second module, and performs processing by using a first activation function, to obtain transformed feature information; and performs linear transformation on the transformed feature information, and performs processing by using a second activation function, to obtain the second subdata.

In this implementation, the foregoing manner is simple and easy to implement. This helps reduce computer resources consumed in a process of generating the second data. In addition, a small quantity of parameters are used in the second module shown in the foregoing manner. This helps reduce communication resources consumed when a parameter of the first machine learning model is transmitted.

In a possible implementation, the at least one second module includes a plurality of second modules, and at least two of the plurality of second modules use different parameters. That is, one piece of second subdata can be generated each time the first apparatus invokes the second module once, but different second modules may be invoked in a process of generating T-1 pieces of second data. For example, a meaning of "two second modules using different parameters" may include any one of the following differences: The two second modules use parameters of a same type, but parameter values used by the two second modules are not completely the same; or types of parameters used by the two second modules are not completely the same.

In this implementation, the plurality of second modules may be used in the first machine learning model, and at least two of the plurality of second modules use different parameters, that is, the T-1 pieces of second subdata are generated by different second modules. This facilitates a degree of matching between a parameter of the second module and generated second subdata, thereby helping obtain second data with better performance.

In a possible implementation, that the first apparatus inputs the first data into the first module to obtain the first subdata generated by the first module may include: The first apparatus obtains, by invoking the first module one or more times, the first subdata generated by the first module. Optionally, each time the first apparatus invokes the first module to process input data, the following may be included: The first apparatus performs linear transformation on the input data by using the first module, and performs processing by using a third activation function, to obtain transformed input data; and performs linear transformation on the transformed input data, and performs processing by using a fourth activation function, to obtain a processing result of the first module. The input data of the first module may be the first data or the feature information of the first data.

In a possible implementation, before the first apparatus inputs the first data into the first machine learning model, the method further includes: The first apparatus obtains to-be-processed data and a value of H, where H is an integer greater than or equal to 1, and H represents a length of the first data; and if a length of the to-be-processed data is less than H, pads the to-be-processed data to obtain the first data, where the length of the first data is H. In this implementation, when the length of the to-be-processed data is less than H, the to-be-processed data is padded to obtain the first data whose length is H, and then the first data whose length is H is input into the first machine learning model. Therefore, regardless of the length of the to-be-processed data, the first machine learning model processes the first data whose length is H. This not only facilitates compatibility with the to-be-processed data of any length, but also helps reduce a data processing difficulty of the first machine learning model, to obtain second data with better performance.

In a possible implementation, the first data includes the to-be-processed data and padding data, the padding data includes first identification information, the first identification information is used to identify the value of T and/or a value of K, K is the length of the to-be-processed data, and K is an integer greater than or equal to 1. In other words, the first identification information may be used to identify the value of T and the value of K, or may be used to identify the value of T, or may be used to identify the value of K. For example, after obtaining the value of T and/or the value of K, the first apparatus may process the value of T and/or the value of K by using a first function, to obtain the first identification information. A condition that the first function needs to meet includes: A value of the first identification information is limited to a preset range, and different values of T and/or different values of K can be mapped to different values. In other words, a value generated by using the first function can uniquely identify a value of T and/or a value of K, or a value generated by using the first function can be used to distinguish between different values of T and/or different values of K.

In this implementation, the first data carries the first identification information used to identify the value of T and/or the value of K. In this case, the first machine learning model can process the first data based on the value of T and/or the value of K, that is, based on a length of the output data of the first machine learning model and/or the length of the real to-be-processed data. This helps obtain second data with better performance based on the second data output by the first machine learning model.

In a possible implementation, a size of a parameter in the first machine learning model is related to the value of H and a value of G, and G is a length of each piece of subdata. In this implementation, the size of the parameter in the first machine learning model is designed based on the length of the first data and the length of each of the T pieces of subdata. This helps reduce a quantity of parameters in the first machine learning model while meeting an output requirement, and helps further reduce communication resources consumed for transmitting the parameter in the first machine learning model.

In a possible implementation, the parameter corresponding to the first machine learning model and/or identification information of the foregoing parameter may be carried in signaling, so that the parameter corresponding to the first machine learning model and/or the identification information of the foregoing parameter are/is transmitted between different apparatuses. Optionally, the parameter corresponding to the first machine learning model is carried in one or more of the following information: downlink control information DCI, uplink control information UCI, sidelink control information SCI, radio resource control RRC signaling, or a media access control control element MAC CE. In addition/Alternatively, identification information of the parameter is carried in any one or more of the following information: the DCI, the UCI, the SCI, the RRC signaling, the MAC CE, a physical broadcast channel PBCH, or a physical random access channel PRACH.

In this implementation, in comparison with a case in which at least one group of parameters of the first machine learning model and/or identification information of each group of parameters are/is carried in a data packet for transmission, the at least one group of parameters and/or the identification information of each group of parameters are/is carried in signaling for transmission, so that transmission efficiency is higher, and fewer computer resources are consumed. In addition, a plurality of types of signaling that can be used to transmit the at least one group of parameters and/or the identification information of each group of parameters are provided in this solution, so that implementation flexibility of this solution is improved.

In a possible implementation, a second apparatus is a receiver of the second data, the second apparatus has a plurality of groups of parameters corresponding to the first machine learning model and identification information of each group of parameters, and the method further includes: The first apparatus sends second identification information to the second apparatus, where the second identification information indicates a group of parameters used in the first machine learning model in the first apparatus. In this implementation, the second apparatus has the plurality of groups of parameters of the first machine learning model and the identification information of each group of parameters. The first apparatus needs only to send the second identification information to the second apparatus, so that the second apparatus can learn which group of parameters is used in the first machine learning model in the first apparatus. A small quantity of communication resources are occupied for transmitting the second identification information, thereby helping reduce consumed communication resources.

According to a second aspect, this application provides a data processing method, to apply an artificial intelligence technology to the communication field. The method is applied to a side of a second apparatus, and the second apparatus may be a device, or may be a component (for example, a chip or a chip system) that can be configured in a device. The method includes: The second apparatus obtains second data, and generates first data based on the second data. The second data includes T pieces of subdata, T is an integer greater than or equal to 1, the second data is generated by a first machine learning model in a first apparatus, the first machine learning model includes one or more modules, and one piece of subdata is obtained each time a module in the first machine learning model is invoked at least once. For example, after obtaining a received signal, the second apparatus may denoise the received signal, and obtain the received second data (that is, estimated second data) from a denoised received signal. For example, if the second data is encoded data, that is, a function of the first machine learning model is encoding, the received second data is obtained after the denoised received signal is demodulated. For another example, if the second data is modulated data, that is, a function of the first machine learning model is modulation, or a function of the first machine learning model is encoding and modulation, the denoised received signal may be directly determined as the second data.

In a possible implementation, a parameter corresponding to the first machine learning model is carried in one or more of the following information: downlink control information DCI, uplink control information UCI, sidelink control information SCI, radio resource control RRC signaling, or a media access control control element MAC CE; and/or identification information of the parameter is carried in any one or more of the following information: the DCI, the UCI, the SCI, the RRC signaling, the MAC CE, a physical broadcast channel PBCH, or a physical random access channel PRACH.

In a possible implementation, the second apparatus has third data, the third data includes a plurality of groups of parameters corresponding to the first machine learning model and identification information of each group of parameters, and the method further includes: The second apparatus receives second identification information sent by the first apparatus; and determines, based on the second identification information and the third data, a group of parameters used in the first machine learning model in the first apparatus. That the second apparatus generates the first data based on the second data includes: The second apparatus may demodulate and/or decode the received second data based on the group of parameters used in the first machine learning model in the first apparatus, to generate the estimated first data.

For specific implementations of the steps, meanings of nouns, and beneficial effects achieved in the possible implementations of the second aspect of this application, refer to the first aspect. Details are not described herein again.

According to a third aspect, this application provides a model training method, to apply an artificial intelligence technology to the communication field. The method is applied to a training apparatus, and the training apparatus may be a device, or may be a component (for example, a chip or a chip system) that can be configured in a device. The method includes: The training apparatus obtains training data from a training data set, where the training data is used to obtain first data and a value of T, and T is an integer greater than or equal to 1. For example, the training data may include to-be-processed data and the value of T, and the to-be-processed data is used to obtain the first data. For example, the to-be-processed data is the same as the first data, or the first data is obtained after the to-be-processed data is padded. T represents a quantity of pieces of subdata included in output data of a first machine learning model. Values of T included in at least two pieces of training data in the training data set are different. The training apparatus inputs the first data into the first machine learning model to obtain second data generated by the first machine learning model, where the second data includes the T pieces of subdata, the first machine learning model includes a plurality of modules, and one piece of subdata generated by a module in the first machine learning model is obtained each time the module is invoked at least once; and trains the first machine learning model based on the second data and a loss function, to obtain a trained first machine learning model.

In a possible implementation, when a function of the first machine learning model includes encoding and/or modulation, the second data is used to determine a to-be-sent signal, and that the training apparatus trains the first machine learning model based on the second data and the loss function includes: The training apparatus obtains a received signal corresponding to the to-be-sent signal, and demodulates and/or decodes the received signal corresponding to the to-be-sent signal to obtain estimated data corresponding to the to-be-processed data; and the training apparatus trains the first machine learning model based on the estimated data and the loss function, where the loss function indicates a similarity between the estimated data and the to-be-processed data.

For example, that the training apparatus obtains the received signal corresponding to the to-be-sent signal may include: The training apparatus multiplies the to-be-sent signal by a channel matrix, and adds a result of the multiplication to noise, to obtain the received signal. The foregoing steps are used to simulate a process in which the to-be-sent signal is transmitted through a channel. Alternatively, the foregoing steps are completed by two training apparatuses in cooperation. In this case, that the training apparatus obtains the received signal corresponding to the to-be-sent signal may include: A first training apparatus sends the to-be-sent signal to a second training apparatus, and the second training apparatus receives the received signal.

In this implementation, a specific implementation of training the first machine learning model when the function of the first machine learning model includes encoding and/or modulation is provided, thereby reducing implementation difficulty of this solution. In addition, the loss function uses the similarity between the estimated data and the to-be-processed data. In other words, an objective of the loss function is to obtain estimated data with better performance. The loss function better meets an actual requirement for sending data between apparatuses. Therefore, the second data output by the trained first machine learning model better meets an actual requirement.

In a possible implementation, when the second data is a reference signal, that the training apparatus trains the first machine learning model based on the second data and the loss function includes: The training apparatus obtains a received reference signal corresponding to the reference signal, and generates predicted channel information based on the received reference signal corresponding to the reference signal; and the training apparatus trains the first machine learning model based on the loss function, where the loss function indicates a similarity between the predicted channel information and correct channel information.

For example, that the training apparatus obtains the received reference signal corresponding to the reference signal may include: The training apparatus multiplies the reference signal by a channel matrix, and adds a result of the multiplication to noise, to obtain the received reference signal. The foregoing steps are used to simulate a process in which the reference signal is transmitted through a channel. Alternatively, the foregoing steps are completed by two training apparatuses in cooperation. In this case, that the training apparatus obtains the received reference signal corresponding to the reference signal may include: A first training apparatus sends the reference signal to a second training apparatus, and the second training apparatus receives the received reference signal.

In this implementation, a specific implementation of training the first machine learning model when the function of the first machine learning model is reference signal generation is further provided. This extends application scenarios of this solution, and improves implementation flexibility of this solution.

In the third aspect of this application, the training apparatus may be further configured to perform the steps performed by the first apparatus in the first aspect and the possible implementations of the first aspect. For specific implementations of the steps, meanings of nouns, and beneficial effects achieved in the possible implementations of the third aspect, refer to the first aspect. Details are not described herein again.

According to a fourth aspect, this application provides a data processing apparatus, to apply an artificial intelligence technology to the communication field. The data processing apparatus includes a processing module. The processing module is configured to obtain a value of T, where T is an integer greater than or equal to 1, and T represents a quantity of pieces of subdata included in output data of a first machine learning model.

The processing module is further configured to input first data into the first machine learning model to obtain second data generated by the first machine learning model, where the second data includes the T pieces of subdata, the first machine learning model includes one or more modules, and one piece of subdata is obtained each time a module in the first machine learning model is invoked at least once.

In a possible implementation, a function of the first machine learning model includes any one or combination of the following: encoding, modulation, or reference signal generation.

In a possible implementation, the plurality of modules in the first machine learning model include a first module and at least one second module, and the processing module is specifically configured to: input the first data into the first module to obtain first subdata generated by the first module, where the first subdata is one of the T pieces of subdata; and input first feature information into the second module to obtain second subdata generated by the second module, where the first feature information includes feature information generated when a module in the first machine learning model is invoked last time for data processing, the second subdata is one of the T pieces of subdata, and the module in the first machine learning model that is invoked last time is the first module or the second module.

In a possible implementation, the plurality of modules in the first machine learning model include a first module and at least one third module, and the processing module is specifically configured to: input the first data into the first module to generate first subdata by using the first module, where the first subdata is one of the T pieces of subdata, and a process of generating the first subdata by using the first module includes performing feature extraction on the first data; and invoke the third module a plurality of times to obtain third subdata generated by the third module, where the third subdata is one of the T pieces of subdata, an input of the third module includes feature information of the first data, and the feature information of the first data is updated a plurality of times in a process of invoking the third module a plurality of times.

In a possible implementation, the processing module is specifically configured to: perform linear transformation on the first feature information by using the second module, and perform processing by using a first activation function, to obtain transformed feature information; and perform linear transformation on the transformed feature information, and perform processing by using a second activation function, to obtain the second subdata.

In a possible implementation, the at least one second module includes a plurality of second modules, and at least two of the plurality of second modules use different parameters.

In a possible implementation, the processing module is further configured to obtain to-be-processed data and a value of H, where H is an integer greater than or equal to 1, and H represents a length of the first data; and the processing module is further configured to: if a length of the to-be-processed data is less than H, pad the to-be-processed data to obtain the first data, where the length of the first data is H.

In a possible implementation, the first data includes the to-be-processed data and padding data, the padding data includes first identification information, the first identification information is used to identify the value of T and/or a value of K, K is the length of the to-be-processed data, and K is an integer greater than or equal to 1.

In a possible implementation, a size of a parameter in the first machine learning model is related to the value of H and a value of G, and G is a length of each piece of subdata.

In a possible implementation, a parameter corresponding to the first machine learning model is carried in one or more of the following information: downlink control information DCI, uplink control information UCI, sidelink control information SCI, radio resource control RRC signaling, or a media access control control element MAC CE; and/or identification information of the parameter is carried in any one or more of the following information: the DCI, the UCI, the SCI, the RRC signaling, the MAC CE, a physical broadcast channel PBCH, or a physical random access channel PRACH.

In a possible implementation, the data processing apparatus is used in a first apparatus, a second apparatus is a receiver of the second data, the second apparatus has a plurality of groups of parameters corresponding to the first machine learning model and identification information of each group of parameters, and the data processing apparatus further includes a transceiver module, configured to send second identification information to the second apparatus, where the second identification information indicates a group of parameters used in the first machine learning model in the first apparatus.

In the fourth aspect of this application, for specific implementations of the steps, meanings of nouns, and beneficial effects achieved in the possible implementations of the fourth aspect, refer to the first aspect. Details are not described herein again.

According to a fifth aspect, this application provides a data processing apparatus, to apply an artificial intelligence technology to the communication field. The data processing apparatus includes a processing module. The processing module is configured to: obtain second data; and generate first data based on the second data. The second data includes T pieces of subdata, T is an integer greater than or equal to 1, the second data is generated by a first machine learning model in a first apparatus, the first machine learning model includes one or more modules, and one piece of subdata is obtained each time a module in the first machine learning model is invoked at least once.

In a possible implementation, a parameter corresponding to the first machine learning model is carried in one or more of the following information: downlink control information DCI, uplink control information UCI, sidelink control information SCI, radio resource control RRC signaling, or a media access control control element MAC CE; and/or identification information of the parameter is carried in any one or more of the following information: the DCI, the UCI, the SCI, the RRC signaling, the MAC CE, a physical broadcast channel PBCH, or a physical random access channel PRACH.

In a possible implementation, the data processing apparatus is used in a second apparatus, the second apparatus has third data, the third data includes a plurality of groups of parameters corresponding to the first machine learning model and identification information of each group of parameters, and the data processing apparatus further includes a transceiver module, configured to receive second identification information sent by the first apparatus. The processing module is further configured to determine, based on the second identification information and the third data, a group of parameters used in the first machine learning model in the first apparatus. The processing module is specifically configured to generate the first data based on the group of parameters used in the first machine learning model in the first apparatus and the second data.

In the fifth aspect of this application, for specific implementations of the steps, meanings of nouns, and beneficial effects achieved in the possible implementations of the fifth aspect, refer to the second aspect. Details are not described herein again.

According to a sixth aspect, this application provides a model training apparatus, to apply an artificial intelligence technology to the communication field. The model training apparatus includes a processing module. The processing module is configured to obtain training data from a training data set, where the training data is used to obtain first data and a value of T, T is an integer greater than or equal to 1, and values of T included in at least two pieces of training data in the training data set are different; the processing module is further configured to input the first data into the first machine learning model to obtain second data generated by the first machine learning model, where the second data includes the T pieces of subdata, the first machine learning model includes a plurality of modules, and one piece of subdata generated by a module in the first machine learning model is obtained each time the module is invoked at least once; and the processing module is further configured to train the first machine learning model based on the second data and a loss function, to obtain a trained first machine learning model.

In a possible implementation, a function of the first machine learning model includes any one or combination of the following: encoding, modulation, or reference signal generation.

In a possible implementation, the plurality of modules in the first machine learning model include a first module and at least one second module, and the processing module is specifically configured to: input the first data into the first module to obtain first subdata generated by the first module, where the first subdata is one of the T pieces of subdata; and input first feature information into the second module to obtain second subdata generated by the second module, where the first feature information includes feature information generated when a module in the first machine learning model is invoked last time for data processing, the second subdata is one of the T pieces of subdata, and the module in the first machine learning model that is invoked last time is the first module or the second module.

In a possible implementation, the processing module is further configured to obtain to-be-processed data from the training data; the processing module is further configured to obtain a value of H, where H is an integer greater than or equal to 1, and H represents a length of the first data; and the processing module is further configured to: if a length of the to-be-processed data is less than H, pad the to-be-processed data to obtain the first data, where the length of the first data is H.

In a possible implementation, when the function of the first machine learning model includes encoding and/or modulation, the second data is used to determine a to-be-sent signal, and the processing module is specifically configured to: demodulate and/or decode a received signal corresponding to the to-be-sent signal to obtain estimated data corresponding to the to-be-processed data; and train the first machine learning model based on the estimated data and the loss function, where the loss function indicates a similarity between the estimated data and the to-be-processed data.

In a possible implementation, when the second data is a reference signal, based on the second data and the loss function, the processing module is specifically configured to: generate predicted channel information based on a received reference signal corresponding to the reference signal; and train the first machine learning model based on the loss function, where the loss function indicates a similarity between the predicted channel information and correct channel information.

In the sixth aspect of this application, for specific implementations of the steps, meanings of nouns, and beneficial effects achieved in the possible implementations of the sixth aspect, refer to the first aspect. Details are not described herein again.

According to a seventh aspect, this application provides a communication system, to apply an artificial intelligence technology to the communication field. The communication system may include the data processing apparatus according to the fourth aspect and the data processing apparatus according to the fifth aspect.

In a possible implementation, the communication system further includes the model training apparatus according to the fifth aspect.

According to an eighth aspect, this application provides a data processing method, to apply an artificial intelligence technology to the communication field. The method includes: A third apparatus obtains first signaling, where the first signaling carries at least one group of parameters used in a first machine learning model and indication information corresponding to each group of parameters, and the indication information indicates positions, in the first machine learning model, of a plurality of parameters included in each group of parameters; and sends the first signaling to a first apparatus. The third apparatus and a second apparatus may be a same apparatus, or may be different apparatuses. This is not limited in this application.

In this implementation, when the at least one group of parameters of the first machine learning model is transmitted by using signaling, the signaling not only carries the at least one group of parameters, but also carries the indication information corresponding to each group of parameters. The indication information indicates the positions, in the first machine learning model, of the plurality of parameters included in each group of parameters. Therefore, after receiving the signaling, the first apparatus can understand how to use the parameters carried in the signaling, and transmit the at least one group of parameters of the first machine learning model by using the signaling. This helps reduce communication resources consumed in a parameter transmission process, and improve efficiency of the parameter transmission process.

In a possible implementation, the first signaling is any one of the following: downlink control information DCI, uplink control information UCI, sidelink control information SCI, radio resource control RRC signaling, or a media access control control element MAC CE.

According to a ninth aspect, this application provides a data processing method, to apply an artificial intelligence technology to the communication field. The method includes: A first apparatus receives first signaling, where the first signaling carries at least one group of parameters used in a first machine learning model and indication information corresponding to each group of parameters, and the indication information indicates positions, in the first machine learning model, of a plurality of parameters included in each group of parameters.

In a possible implementation, the first signaling is any one of the following: downlink control information DCI, uplink control information UCI, sidelink control information SCI, radio resource control RRC signaling, or a media access control control element MAC CE.

According to a tenth aspect, an embodiment of this application provides an apparatus, including at least one processor. The at least one processor is coupled to a memory, the memory is configured to store a program or instructions, and the at least one processor is configured to execute the program or the instructions, so that the apparatus performs the method in any one of the foregoing aspects.

According to an eleventh aspect, an embodiment of this application provides a computer-readable storage medium. The computer-readable storage medium stores a computer program, and when the computer program is run on a computer, the computer is enabled to perform the method in any one of the foregoing aspects.

According to a twelfth aspect, an embodiment of this application provides a computer program product. The computer program product includes a program, and when the program is run on a computer, the computer is enabled to perform the method in any one of the foregoing aspects.

According to a thirteenth aspect, this application provides a chip system. The chip system includes a processor, configured to support a communication apparatus in implementing functions in the foregoing aspects, for example, sending or processing data and/or information in the foregoing method. In a possible design, the chip system further includes a memory. The memory is configured to store program instructions and data that are necessary for the communication apparatus. The chip system may include a chip, or may include a chip and another discrete component.

## BRIEF DESCRIPTION OF DRAWINGS

FIG. 1 is a diagram of an architecture of a wireless communication system according to an embodiment of this application;
FIG. 2 is a diagram of another architecture of a wireless communication system according to an embodiment of this application;
FIG. 3 is a schematic flowchart of a data processing method according to an embodiment of this application;
FIG. 4 is another diagram of a data processing method according to an embodiment of this application;
FIG. 5 is a schematic flowchart in which a first apparatus and a second apparatus determine a group of parameters used in a first machine learning model according to an embodiment of this application;
FIG. 6 is a schematic flowchart in which a first apparatus obtains a group of parameters used in a first machine learning model according to an embodiment of this application;
FIG. 7 is a diagram of first data according to an embodiment of this application;
FIG. 8 is a diagram of generating T pieces of subdata by using a first machine learning model according to an embodiment of this application;
FIG. 9 is a diagram of a model training method according to an embodiment of this application;
FIG. 10 is a diagram of a structure of a data processing apparatus according to an embodiment of this application;
FIG. 11 is a diagram of another structure of a data processing apparatus according to an embodiment of this application;
FIG. 12 is a diagram of a model training apparatus according to an embodiment of this application;
FIG. 13 is a diagram of an apparatus according to an embodiment of this application;
FIG. 14 is another diagram of an apparatus according to an embodiment of this application; and
FIG. 15 is a diagram of a structure of a chip according to an embodiment of this application.

## DESCRIPTION OF EMBODIMENTS

The following describes embodiments of this application with reference to accompanying drawings. It is clear that the described embodiments are merely some but not all of embodiments of this application. A person of ordinary skill in the art may learn that, with development of technologies and emergence of a new scenario, the technical solutions provided in embodiments of this application are also applicable to a similar technical problem.

In the specification, claims, and accompanying drawings of this application, the terms "first", "second", and the like are intended to distinguish between similar objects (for example, distinguish between objects in a same embodiment), but do not necessarily describe a specific order or sequence. In addition, objects defined by "first" and "second" (for example, "first apparatus" and "second apparatus") in different embodiments may represent different objects. It should be understood that data used in such a manner is interchangeable in proper circumstances. In this way, the embodiments described herein can be implemented in a sequence other than the content illustrated or described herein.

In addition, the terms "include", "have", and any variants thereof are intended to cover non-exclusive inclusion. For example, a process, method, system, product, or device including a series of steps or modules is not necessarily limited to those clearly listed steps or modules, but may include other steps or modules that are not clearly listed or are inherent to the process, method, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved.

"Sending" and "receiving" in embodiments of this application represent signal transfer directions. For example, "sending information to XX device" may be understood as that a destination end of the information is XX device, and may include direct sending through an air interface, or include indirect sending through an air interface by another unit or module. "Receiving information from YY device" may be understood as that a source end of the information is YY device, and may include direct receiving from YY device through an air interface, or may include indirect receiving from YY device via another unit or module through an air interface. "Sending" may alternatively be understood as "outputting" of a chip interface, and "receiving" may alternatively be understood as "inputting" of the chip interface. In other words, sending and receiving may be performed between devices, or may be performed within a device. For example, sending or receiving is performed between components, modules, chips, software modules, or hardware modules in a device by using a bus, a cable, or an interface. It may be understood that necessary processing, for example, encoding and modulation, may be performed on information between a source end and a destination end of information sending, but the destination end may understand valid information from the source end. Similar expressions in this application may be understood similarly. Details are not described again.

In embodiments of this application, "indication" may include a direct indication and an indirect indication, or may include an explicit indication and an implicit indication. Information indicated by a piece of information (for example, the following indication information) is referred to as to-be-indicated information. In a specific implementation process, the to-be-indicated information is indicated in a plurality of manners. By way of example and not limitation, the to-be-indicated information may be directly indicated, for example, the to-be-indicated information or an index of the to-be-indicated information is indicated. Alternatively, the to-be-indicated information may be indirectly indicated by indicating other information. There is an association relationship between the other information and the to-be-indicated information. Alternatively, only a part of the to-be-indicated information may be indicated, and the remaining part of the to-be-indicated information is known or pre-agreed on. For example, specific information may be indicated by using an arrangement sequence of pieces of information that are pre-agreed on (for example, predefined in a protocol), to reduce indication overheads to some extent. A specific indication manner is not limited in this application. It may be understood that, for a sender of the indication information, the indication information may indicate to-be-indicated information, and for a receiver of the indication information, the indication information may be for determining the to-be-indicated information.

In this application, an artificial intelligence technology may be applied to the communication field. Optionally, the artificial intelligence technology may be applied to an application scenario of signal sending. For example, a machine learning model may be used to perform any one or more of the following tasks: encoding, modulation, reference signal generation, another task in the communication field, or the like.

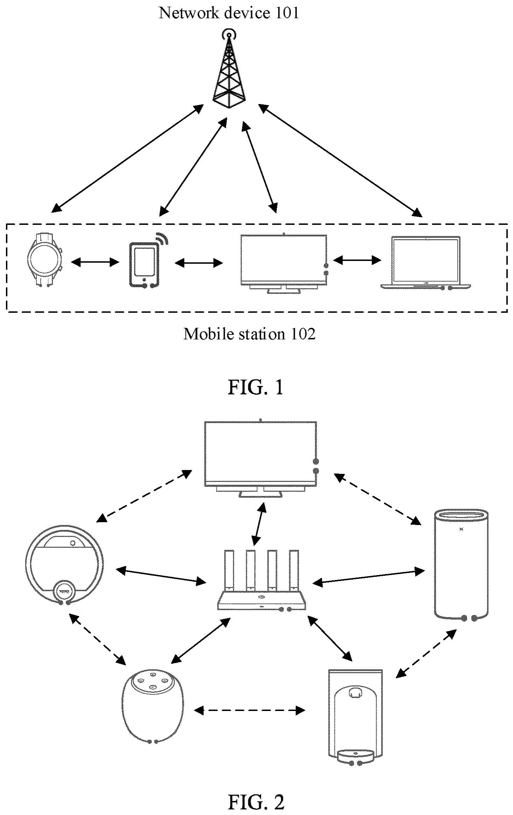

Before a data processing method provided in this application is described in detail, a scenario to which the method provided in embodiments of this application is applied is first described. Refer to FIG. 1. FIG. 1 is a diagram of an architecture of a wireless communication system according to an embodiment of this application. The method provided in this application may be applied to the wireless communication system. As shown in FIG. 1, the wireless communication system includes a network device 101 and a mobile station (mobile station, MS) 102. A wireless connection may be established between the network device 101 and each terminal device, and a wireless connection may also be established between terminal devices.

The network device 101 may be a device that provides a wireless access service in a wireless network. For example, the network device 101 may be a device that connects the mobile station 102 to a wireless network, and may also be referred to as a base station. The base station may be a macro base station, a micro base station, a relay station, an access point, or the like in various forms. In wireless communication systems that use different radio access technologies, names of network devices 101 having a base station function may be different. For example, the base station may be referred to as an evolved NodeB (evolved NodeB, eNB), a NodeB (NodeB, NB), a next generation NodeB (the next Generation NodeB, gNB) in a 5th generation (5th generation, 5G) communication system, a home base station (for example, a home evolved NodeB or a home NodeB, HNB), a baseband unit (baseband unit, BBU), a wireless fidelity (wireless fidelity, Wi-Fi) access point (Access Point, AP), a transmission reception point (transmission reception point, TRP), a radio network controller (radio network controller, RNC), or the like. In another possible scenario, a plurality of network nodes collaborate to assist in implementing radio access, and different network nodes respectively implement some functions of the base station. For example, the network node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In different systems, the CU (or the CU-CP and the CU-UP), the DU, or the RU may alternatively have different names, but a person skilled in the art may understand meanings thereof. For example, in an ORAN system, the CU may also be referred to as an open CU (O-CU), the DU may also be referred to as an open DU (O-DU), the CU-CP may also be referred to as an open CU-CP (O-CU-CP), the CU-UP may also be referred to as an open CU-UP (O-CU-UP), and the RU may also be referred to as an open RU (O-RU). Any unit in the CU (or the CU-CP or the CU-UP), the DU, and the RU may be implemented by using a software module, a hardware module, or a combination of the software module and the hardware module. A specific device form of the network device 101 is not limited in embodiments of this application.

The mobile station 102 refers to a wireless terminal device (terminal) that can receive scheduling information and indication information sent by the network device 101. The mobile station 102 may be a handheld device having a wireless communication function, a vehicle-mounted device, a wearable device, a computing device, or another processing device connected to a wireless modem.

The mobile station 102 may communicate with one or more core networks or the internet through a radio access network (radio access network, RAN). For example, the mobile station 102 may be a portable, pocket-sized, handheld, computer built-in, or in-vehicle mobile apparatus that exchanges voice and/or data with the radio access network. For example, the mobile station 102 may be a subscriber unit (user agent), a cellular phone (cellular phone), a smart phone (smart phone), a personal digital assistant (personal digital assistant, PDA), a tablet computer (Tablet Personal Computer, Tablet PC), a wireless modem (modem), a handheld device (handset), a laptop computer (laptop computer), a personal communications service (personal communications service, PCS) phone, a remote station (remote station), an access point (access point, AP), a remote terminal device (remote terminal), an access terminal device (access terminal), customer premises equipment (customer premises equipment, CPE), a terminal (terminal), user equipment (user equipment, UE), a mobile terminal (mobile terminal, MT), or the like.

For another example, the mobile station 102 may alternatively be a wearable device, which is a general term of wearable devices that are intelligently designed and developed for daily wear by using a wearable technology, for example, glasses, gloves, watches, clothes, and shoes. The wearable device is a portable device that is directly worn on a body or integrated into clothes or an accessory of a user. The wearable device is not only a hardware device, but also implements a powerful function through software support, data exchange, and cloud interaction. Generalized wearable intelligent devices include full-featured and large-sized devices that can implement complete or partial functions without depending on a smartphone, for example, a smartwatch or smart glasses, and devices that focus on only one type of application function and need to work with another device such as a smartphone, for example, various smart bands, smart helmets, or smart jewelry for monitoring physical signs.

For another example, the mobile station 102 may alternatively be an uncrewed aerial vehicle, a robot, a terminal device in device-to-device (device-to-device, D2D) communication, a terminal device in vehicle-to-everything (vehicle-to-everything, V2X), a virtual reality (virtual reality, VR) device, an augmented reality (augmented reality, AR) device, a wireless terminal in industrial control (industrial control), a terminal device in self-driving (self-driving), a terminal device in telemedicine (remote medical), a terminal device in a smart grid (smart grid), a wireless terminal in a smart city (smart city), a terminal device in a smart home (smart home), or the like.

In addition, the mobile station 102 may alternatively be a terminal device in a communication system (for example, a 6th generation (6th generation, 6G) communication system) after a 5G communication system, a terminal device in a future evolved public land mobile network (public land mobile network, PLMN), or the like. A device form of the mobile station 102 is not limited in embodiments of this application.

In some application scenarios, the network device 101 may send downlink data to each terminal device, or each terminal device may send uplink data to the network device 101. In a data sending process, the network device 101 or each terminal device may use a machine learning model. In this case, the data processing method provided in this application may be used.

In some other application scenarios, terminal devices may further send data to each other. In a data sending process, the terminal devices may use a machine learning model. In this case, the data processing method provided in this application may be used.

Still refer to FIG. 2. FIG. 2 is a diagram of another architecture of a wireless communication system according to an embodiment of this application. As shown in FIG. 2, in a smart home scenario, various smart home products are connected to each other through a wireless network, so that the smart home products can transmit data to each other. In FIG. 2, smart home products such as a smart television, a smart air purifier, a smart water dispenser, a smart speaker, and a robotic vacuum cleaner are used as an example. These smart home products are all connected to a same wireless network by using a wireless router, to implement data exchange between the smart home products. In addition to the smart home products in the foregoing example, during actual application, another type of smart home product may be further included, for example, a smart home product like a smart refrigerator, a smart cooker hood, or a smart curtain. A type of the smart home product is not limited in this embodiment.

In addition, different smart home products may alternatively be directly connected to each other in a wireless manner, and do not need to access the same wireless network by using the wireless router. For example, the smart home products are wirelessly connected to each other through Bluetooth.

In addition to the scenarios described in FIG. 1 and FIG. 2, the method provided in embodiments of this application may be further applied to another communication system scenario. For example, in a smart factory scenario, different devices (for example, devices such as a smart robot, a lathe, and a transportation vehicle) are connected to each other through a wireless network, and transmit data to each other through the wireless network. A specific scenario to which the data processing method is applied is not limited in embodiments of this application.

It should be noted that the wireless communication system mentioned in embodiments of this application includes but is not limited to communication systems such as a 5th generation mobile communication technology (5th Generation Mobile Communication Technology, 5G) communication system, a 6G communication system, a satellite communication system, a short-range communication system, a narrowband internet of things (Narrowband Internet of Things, NB-IoT) system, a global system for mobile communications (Global System for Mobile Communications, GSM), an enhanced data rate for GSM evolution (Enhanced Data rate for GSM Evolution, EDGE) system, a wideband code division multiple access (Wideband Code Division Multiple Access, WCDMA) system, a code division multiple access 2000 (Code Division Multiple Access, CDMA 2000) system, a time division-synchronous code division multiple access (Time Division-Synchronous Code Division Multiple Access, TD-SCDMA) system, and a long term evolution (Long Term Evolution, LTE) system. A specific architecture of the wireless communication system is not limited in embodiments of this application.

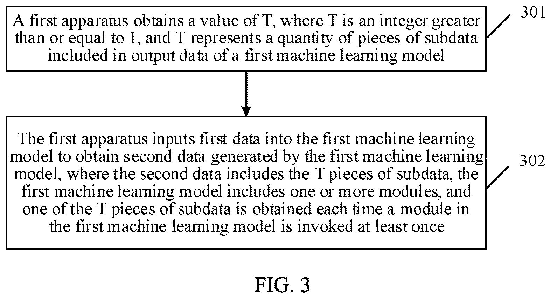

In the foregoing application scenarios, when an apparatus needs to send data, the data processing method provided in this application may be used. Specifically, refer to FIG. 3. FIG. 3 is a schematic flowchart of a data processing method according to an embodiment of this application. As shown in FIG. 3, at 301, a first apparatus obtains a value of T, where T is an integer greater than or equal to 1, and T represents a quantity of pieces of subdata included in output data of a first machine learning model. At 302, the first apparatus inputs first data into the first machine learning model to obtain second data generated by the first machine learning model, where the second data includes the T pieces of subdata, the first machine learning model includes one or more modules, and one of the T pieces of subdata is obtained each time a module in the first machine learning model is invoked at least once. For example, one module or a plurality of modules in the first machine learning model may be invoked each time.

For example, the first apparatus may be any device that needs to send data in the foregoing plurality of application scenarios. For example, the first apparatus may be the network device 101 or the mobile station 102 in FIG. 1. For another example, the first apparatus may be the smart home product or the wireless router in FIG. 2. Alternatively, the first apparatus may be another device that needs to send data, or the like. A form of the first apparatus is not limited in embodiments of this application.

Optionally, a function of the first machine learning model includes any one or combination of the following: encoding, modulation, reference signal generation, another function, or the like. For example, if the function of the first machine learning model is encoding, the first data is data that needs to be encoded, and the second data is encoded data. For another example, if the function of the first machine learning model is modulation, the first data is data that needs to be modulated, and the second data is modulated data. For another example, if the function of the first machine learning model is reference signal generation, the first data may be index numbers of a plurality of reference signals, and the second data may be the reference signals. For another example, if the function of the first machine learning model is encoding and modulation, the first data is data that needs to be encoded and modulated, and the second data is encoded and modulated data. When the first machine learning model has another function, the first data and the second data may be represented as data of another type, or the like. This is not limited in embodiments of this application.

In embodiments of this application, one piece of subdata can be obtained each time the module in the first machine learning model is invoked at least once, and after the value of T is obtained, a quantity of times of invoking the module in the first machine learning model may be flexibly adjusted based on the value of T, to generate the T pieces of subdata. Therefore, the first machine learning model can be compatible with a plurality of values of T, and there is no need to store a plurality of machine learning models, so that storage space overheads are reduced.

In embodiments of this application, the following first describes a detailed implementation process of an inference phase of the first machine learning model, and then describes a detailed implementation process of a training phase of the first machine learning model. The "inference phase of the first machine learning model" is a process of performing data processing by using the first machine learning model, and the "training phase of the first machine learning model" is a process of performing iterative training on the first machine learning model by using training data. The process of performing iterative training on the first machine learning model is also a process of performing iterative update on a parameter used in the first machine learning model. After iterative training is performed on the first machine learning model by using the training data, one or more groups of trained parameters corresponding to the first machine learning model can be obtained, and the parameters obtained in the training phase are used in the inference phase.

1. Inference phase

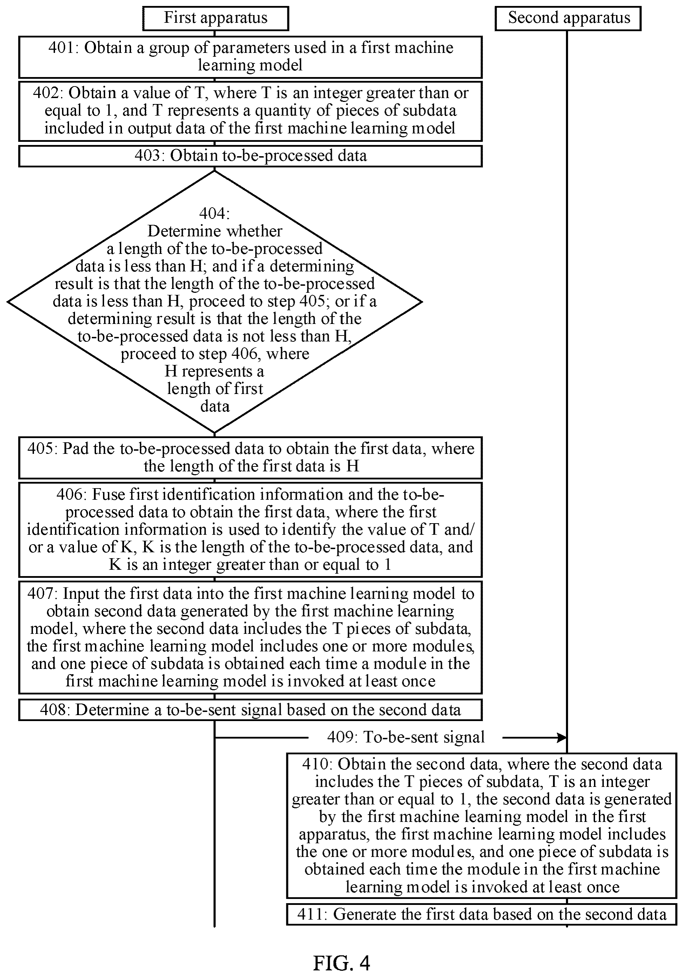

Specifically, refer to FIG. 4. FIG. 4 is another diagram of a data processing method according to an embodiment of this application. As shown in FIG. 4, the data processing method includes steps 401 to 411.

401: A first apparatus obtains a group of parameters used in a first machine learning model.

In this embodiment of this application, before performing data processing by using the first machine learning model, the first apparatus needs to first determine a group of trained parameters used in the first machine learning model.

For example, the group of trained parameters includes parameters required by all modules in the first machine learning model.

The first apparatus may obtain, in a plurality of manners, the group of parameters used in the first machine learning model. In an implementation, a plurality of groups of trained parameters of the first machine learning model and identification information of each group of trained parameters may be predefined. For example, the "identification information of each group of trained parameters" may also be referred to as an index number of each group of trained parameters.

For more intuitive understanding of this solution, Table 1 shows a correspondence between a plurality of groups of trained parameters of the first machine learning model and identification information of each group of trained parameters. Table 1 uses an example in which the group of parameters used in the first machine learning model includes the following plurality of parameters: U, W, $\theta_s$, V, and $\theta_0$. For example, parameters used in a process of performing feature extraction on input data of the first machine learning model to obtain feature information of the input data include U and $\theta_s$, parameters used in a process of performing feature update on the feature information of the input data include W and $\theta_s$, and parameters used in a process of generating a plurality of pieces of subdata in output data of the first machine learning model based on the feature information of the input data include V and $\theta_0$.

Table 1

| Index number | U | W | $\theta_s$ | V | $\theta_o$ |
|---|---|---|---|---|---|
| 0 | Matrix-U0 | Matrix-WO | Vector-s0 | Matrix-V0 | Vector-o0 |
| 1 | Matrix-U1 | Matrix-W1 | Vector-s1 | Matrix-V1 | Vector-o1 |
| 2 | Matrix-U2 | Matrix-W2 | Vector-s2 | Matrix-V2 | Vector-o2 |

In the second row of Table 1, Matrix (matrix)-U0 represents a value of the parameter U, Matrix-WO represents a value of the parameter W, Vector (vector)-s0 represents a value of the parameter $\theta_s$, Matrix-V0 represents a value of the parameter V, Vector-o0 represents a value of the parameter $\theta_0$, Matrix-U0, Matrix-WO, Vector-s0, Matrix-V0, and Vector-o0 represent a group of parameters of the first machine learning model, and an index number "0" in the second row of Table 1 represents identification information of the group of parameters. The third row and the fourth row in Table 1 may be understood with reference to the foregoing explanations of the first row of Table 1. It should be noted that the example in Table 1 is merely for ease of understanding, and a correspondence between each group of parameters in the plurality of groups of parameters of the first machine learning model and identification information is not intended to limit this solution.

Optionally, different groups of parameters in the plurality of groups of trained parameters of the first machine learning model correspond to different indicator ranges of at least one first preset indicator. For example, the at least one first preset indicator may include any one or more of the following indicators: a moving speed of a terminal device, a maximum value of a multipath delay spread, a peak-to-average power ratio (peak-to-average power ratio, PAPR), another indicator, or the like. Specific indicators used are not limited in this embodiment of this application.

For example, a group of parameters correspondingly used when the moving speed of the terminal device is greater than or equal to a speed threshold is different from a group of parameters correspondingly used when the moving speed of the terminal device is less than the speed threshold. For another example, a group of parameters correspondingly used when the maximum value of the multipath delay spread is greater than a threshold 1 is different from a group of parameters correspondingly used when the maximum value of the multipath delay spread is less than the threshold 1. For another example, a group of parameters correspondingly used when a value of the PAPR falls within a range 1 is different from a group of parameters correspondingly used when a value of the PAPR falls within a range 2.

For more intuitive understanding of this solution, Table 2 shows a correspondence between a plurality of groups of different trained parameters, different scenarios, and different indicator ranges of first preset indicators.

Table 2

| | | | |
|---|---|---|---|
| High-speed movement scenario | A multipath delay spread is large | A value of a PAPR is within a range 1 | Identification information of a parameter 1 |
| High-speed movement scenario | A multipath delay spread is small | A value of a PAPR is within a range 1 | Identification information of a parameter 2 |
| Low-speed movement scenario | A multipath delay spread is large | A value of a PAPR is within a range 1 | Identification information of a parameter 3 |
| Low-speed movement scenario | A multipath delay spread is small | A value of a PAPR is within a range 1 | Identification information of a parameter 4 |

(continued)

| | | | |
|---|---|---|---|
| High-speed movement scenario | A multipath delay spread is large | A value of a PAPR is within a range 2 | Identification information of a parameter 5 |
| High-speed movement scenario | A multipath delay spread is small | A value of a PAPR is within a range 2 | Identification information of a parameter 6 |
| Low-speed movement scenario | A multipath delay spread is large | A value of a PAPR is within a range 2 | Identification information of a parameter 7 |
| Low-speed movement scenario | A multipath delay spread is small | A value of a PAPR is within a range 2 | Identification information of a parameter 8 |

The high-speed movement scenario represents that the moving speed of the terminal device is greater than or equal to a speed threshold, the low-speed movement scenario represents that the moving speed of the terminal device is less than the speed threshold, that the multipath delay spread is large represents that the maximum value of the multipath delay spread is greater than a threshold 1, and that the multipath delay spread is small represents that the maximum value of the multipath delay spread is less than the threshold 1. In Table 2, an example in which eight groups of parameters of the first machine learning model are predefined is used. The eight groups of parameters are respectively a parameter 1, a parameter 2, a parameter 3, a parameter 4, a parameter 5, a parameter 6, a parameter 7, and a parameter 8. Different groups of parameters in the eight groups of parameters of the first machine learning model correspond to different scenarios and different indicator ranges of the first preset indicators. It should be noted that the example in Table 2 is merely used to facilitate understanding of a relationship between different groups of parameters in the plurality of groups of trained parameters of the first machine learning model. A specific quantity of groups of predefined parameters and a specific use manner may be flexibly set with reference to an actual scenario. This is not limited herein.

In one case, if the first apparatus is a terminal device, in an implementation (which is referred to as implementation 1 below for ease of description), before step 401 is performed, a plurality of pieces of identification information corresponding to the parameters of the first machine learning model and a first rule are deployed in the first apparatus (that is, the terminal device), and the first rule indicates a correspondence between different pieces of identification information in the plurality of pieces of identification information corresponding to the parameters of the first machine learning model and different indicator ranges of at least one first preset indicator. Because the plurality of pieces of identification information corresponding to the parameters of the first machine learning model include identification information of each of the plurality of groups of parameters of the first machine learning model, for a meaning of the first rule, refer to the "correspondence between different groups of parameters in the plurality of groups of trained parameters and different indicator ranges of at least one first preset indicator" disclosed in the foregoing descriptions. Details are not described herein again. The first apparatus may determine, based on a value of the at least one first preset indicator and the first rule, one piece of second identification information from the plurality of pieces of identification information corresponding to the parameters of the first machine learning model, where the second identification information is identification information of the group of parameters used in the first machine learning model in the first apparatus. It should be noted that a concept of "first identification information" is used in subsequent descriptions, and a meaning of the first identification information is also described in the subsequent descriptions. Details are not described herein. For a plurality of forms of a base station and a terminal device, refer to the foregoing descriptions. Details are not described herein again.

The first apparatus may send the second identification information to the base station. After receiving the second identification information sent by the first apparatus, the base station may send, to the first apparatus, a group of trained parameters to which the second identification information points. The foregoing group of trained parameters sent by the base station is a group of trained parameters used in the first machine learning model in the first apparatus. Step 401 may include: The first apparatus can obtain the foregoing group of trained parameters sent by the base station, so as to determine the obtained group of parameters as the group of parameters used in the first machine learning model.

Optionally, the base station may send, to the first apparatus, the second identification information and the group of parameters to which the second identification information points. Correspondingly, the first apparatus can obtain the second identification information and the group of parameters to which the second identification information points, and the first apparatus determines the obtained group of parameters as the group of parameters used in the first machine learning model.

It should be noted that, in the foregoing implementation, if a second apparatus that performs data communication with the first apparatus (that is, the terminal device) is the base station, in a process in which the first apparatus obtains the group of trained parameters used in the first machine learning model, the second apparatus has determined which group of parameters is used in the first machine learning model in the first apparatus.

If a second apparatus that performs data communication with the first apparatus (that is, the terminal device) is another terminal device, after step 401, the first apparatus may further send the group of parameters (which is referred to as a "group of target parameters" below for ease of description) used in the first machine learning model to the second apparatus, so that the second apparatus can determine which group of parameters is used in the first machine learning model in the first apparatus.

If the first apparatus is the terminal device, in another implementation (which is referred to as implementation 2 below for ease of description), at least one piece of third identification information corresponding to the parameters of the first machine learning model may be configured in the first apparatus. Each piece of third identification information in the at least one piece of third identification information is identification information of a group of parameters that can be used in the first machine learning model, and a group of parameters to which each piece of third identification information in the at least one piece of third identification information points meets a hardware capability of the first apparatus, that is, the hardware capability of the first apparatus can support execution of the group of parameters to which each piece of third identification information points. Before performing step 401, the first apparatus may send all the configured third identification information to the base station. Correspondingly, after receiving the at least one piece of third identification information sent by the first apparatus, the base station may obtain a group of trained parameters to which each piece of third identification information points (that is, a group of parameters that can be used in the first machine learning model). The base station sends, to the first apparatus, at least one group of trained parameters of the first machine learning model that is in one-to-one correspondence with the at least one piece of third identification information, and the first apparatus receives the at least one group of parameters that is in one-to-one correspondence with the at least one piece of third identification information.

Step 401 may include: The first apparatus may select, from the at least one group of parameters that is in one-to-one correspondence with the at least one piece of third identification information, a group of target parameters used in the first machine learning model.

For example, different pieces of third identification information in the at least one piece of third identification information may be corresponding to different indicator ranges of at least one second preset indicator. The first apparatus may determine, based on a value of the at least one second preset indicator, one piece of second identification information from a plurality of pieces of third identification information corresponding to the parameters of the first machine learning model, so as to select, from the at least one group of parameters that is in one-to-one correspondence with the at least one piece of third identification information, a group of target parameters corresponding to the one piece of second identification information.

For a specific implementation in which "the first apparatus may determine, based on a value of the at least one second preset indicator, one piece of second identification information from a plurality of pieces of third identification information corresponding to the parameters of the first machine learning model", refer to the foregoing descriptions of the specific implementation in which "the first apparatus may determine, based on the value of the at least one first preset indicator, one piece of second identification information from the plurality of pieces of identification information corresponding to the parameters of the first machine learning model". Details are not described herein again.

A meaning of the "at least one second preset indicator" may be the same as or different from a category of the "at least one first preset indicator". A specific category of the "at least one second preset indicator" may be flexibly set according to an actual situation. This is not limited herein.

Optionally, if a second apparatus that performs data communication with the first apparatus (that is, the terminal device) is the base station, after step 401, the first apparatus may further send, to the base station (that is, an example of the second apparatus), one piece of second identification information determined by the first apparatus from at least one third identifier. Correspondingly, the base station receives the one piece of second identification information sent by the first apparatus, so that the second apparatus can determine which group of parameters is used in the first machine learning model in the first apparatus.

If a second apparatus that performs data communication with the first apparatus (that is, the terminal device) is another terminal device, after step 401, the first apparatus may further send a group of target parameters used in the first machine learning model to the second apparatus, so that the second apparatus can determine which group of parameters is used in the first machine learning model in the first apparatus.

In another case, if the first apparatus is a base station (which is referred to as implementation 3 below for ease of description), and a second apparatus that performs data communication with the first apparatus is a terminal device, because a plurality of groups of trained parameters of the first machine learning model and identification information of each group of trained parameters may be deployed in the base station, step 401 may include: The base station (that is, an example of the first apparatus) may determine, based on a value of at least one first preset indicator from the plurality of groups of trained parameters of the first machine learning model, a group of target parameters used in the first machine learning model.

For example, the first apparatus (that is, the base station) may determine, based on the value of the at least one first preset indicator, one piece of second identification information from a plurality of pieces of identification information corresponding to the first machine learning model, and then determine a group of parameters to which the second identification information points, so as to determine the group of target parameters used in the first machine learning model.

Optionally, after step 401, the first apparatus (that is, the base station) may further send, to the second apparatus (that is, the terminal device communicating with the base station), the group of target parameters used in the first machine learning model, so that the second apparatus can determine which group of parameters is used in the first machine learning model in the first apparatus.

In another implementation (which is referred to as implementation 4 below for ease of description), before the first apparatus and the second apparatus perform data communication, the first apparatus and the second apparatus each have a plurality of groups of trained parameters of the first machine learning model and identification information of each group of trained parameters. For example, the first apparatus may send the plurality of groups of trained parameters of the first machine learning model and the identification information of each group of trained parameters to the second apparatus. For example, the base station (an example of the first apparatus) may send the plurality of groups of trained parameters of the first machine learning model and the identification information of each group of trained parameters to the terminal device (an example of the second apparatus). For another example, the terminal device (an example of the first apparatus) may send the plurality of groups of trained parameters of the first machine learning model and the identification information of each group of trained parameters to the base station (an example of the second apparatus). For another example, a first terminal device (an example of the first apparatus) may send the plurality of groups of trained parameters of the first machine learning model and the identification information of each group of trained parameters to a second terminal device (an example of the second apparatus).

Alternatively, the plurality of groups of trained parameters of the first machine learning model and the identification information of each group of trained parameters have been preconfigured in both a network device and a mobile station in a wireless communication system, and the network device and the mobile station in the wireless communication system include the first apparatus and the second apparatus.

In this case, step 401 may include: The first apparatus obtains a group of target parameters from the plurality of groups of trained parameters of the first machine learning model. For example, the first apparatus may determine, based on the value of the at least one first preset indicator, one piece of second identification information from a plurality of pieces of identification information corresponding to the parameters of the first machine learning model, and then determine a group of parameters to which the second identification information points, so as to determine the group of parameters used in the first machine learning model. For a specific implementation of the foregoing step, refer to the foregoing descriptions. Details are not described herein again.

Optionally, after step 401, the first apparatus may further send the foregoing one piece of second identification information to the second apparatus. Correspondingly, the second apparatus receives the one piece of second identification information sent by the first apparatus. The second apparatus may determine, based on the one piece of received second identification information and third data, which group of parameters is used in the first machine learning model in the first apparatus. The third data includes a plurality of groups of parameters that are in the second apparatus and that are corresponding to the first machine learning model and identification information of each group of parameters. Specific forms of the first apparatus and the second apparatus may be flexibly determined with reference to an actual application scenario. This is not limited herein.

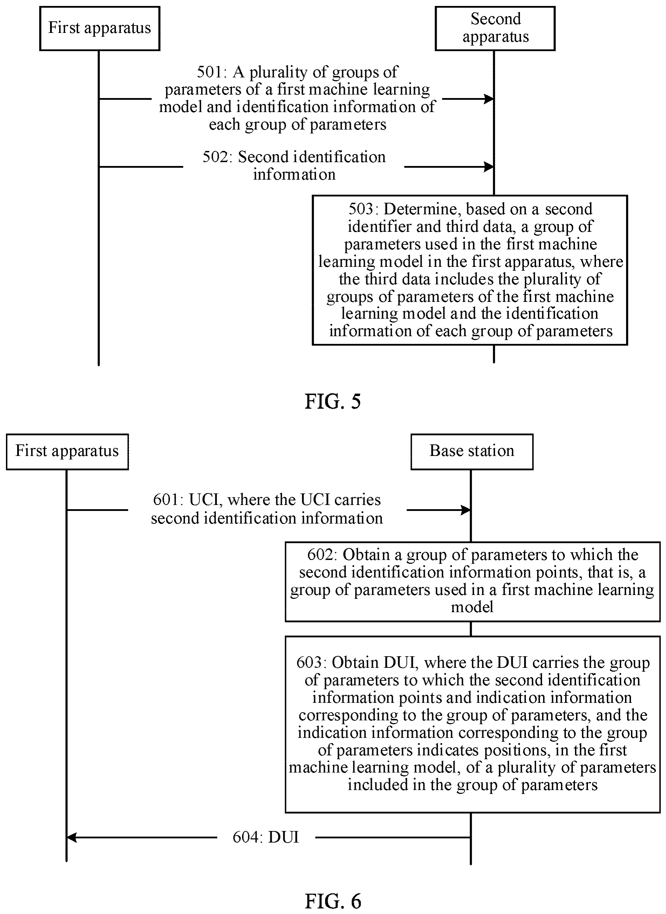

For more intuitive understanding of this solution, refer to FIG. 5. FIG. 5 is a schematic flowchart in which a first apparatus and a second apparatus determine a group of parameters used in a first machine learning model according to an embodiment of this application. As shown in FIG. 5, at 501, the first apparatus sends a plurality of groups of parameters of the first machine learning model and identification information of each group of parameters to the second apparatus. At 502, the first apparatus sends second identification information to the second apparatus. At 503, the second apparatus determines, based on a second identifier and third data, the group of parameters used in the first machine learning model in the first apparatus, where the third data includes the plurality of groups of parameters of the first machine learning model and the identification information of each group of parameters. It should be understood that the example in FIG. 5 is merely for ease of understanding this solution, and is not intended to limit this solution.

In this embodiment of this application, the second apparatus has the plurality of groups of parameters of the first machine learning model and the identification information of each group of parameters. The first apparatus needs only to send the second identification information to the second apparatus, so that the second apparatus can learn which group of parameters is used in the first machine learning model in the first apparatus. A small quantity of communication resources are occupied for transmitting the second identification information, thereby helping reduce consumed communication resources.

It should be noted that, in this embodiment of this application, an execution sequence between the operation that "the second apparatus determines which group of parameters is used in the first machine learning model in the first apparatus" and subsequent steps 402 to 411 is not limited. The operation that "the second apparatus determines which group of parameters is used in the first machine learning model in the first apparatus" may be performed before or after any one of steps 402 to 411.

In another implementation, only one group of trained parameters of the first machine learning model may be predefined, and the group of trained parameters of the first machine learning model may be preconfigured in the first apparatus. In this case, when the first apparatus needs to use the first machine learning model, the first apparatus may directly locally obtain the group of parameters used in the first machine learning model.

In this embodiment of this application, to enable the first apparatus to obtain the group of trained parameters used in the first machine learning model, and to enable the second apparatus that performs data communication with the first apparatus to determine which parameter is used in the first machine learning model in the first apparatus, a trained parameter corresponding to the first machine learning model and/or identification information of the parameter may need to be sent between different apparatuses.

For example, in the foregoing implementation 1, the terminal device (that is, an example of the first apparatus) may send the second identification information (that is, identification information of the trained parameter corresponding to the first machine learning model) to the base station. For another example, the base station may send, to the terminal device, a group of trained parameters to which the second identification information points, that is, a group of target parameters used in the first machine learning model. For another example, the terminal device (that is, an example of the first apparatus) may send, to another terminal device (that is, an example of the second apparatus), a group of target parameters used in the first machine learning model.

For another example, in the foregoing implementation 2, the terminal device (that is, an example of the first apparatus) may send at least one piece of third identification information (that is, identification information of the trained parameter corresponding to the first machine learning model) to the base station. For another example, the base station sends, to the terminal device (that is, an example of the first apparatus), the foregoing at least one group of trained parameters of the first machine learning model that is in one-to-one correspondence with the at least one piece of third identification information. For another example, if the second apparatus that performs data communication with the first apparatus (that is, the terminal device) is the base station, the first apparatus may further send the foregoing one piece of second identification information to the base station (that is, an example of the second apparatus). For another example, if the second apparatus that performs data communication with the first apparatus (that is, the terminal device) is another terminal device, the first apparatus may further send a group of target parameters used in the first machine learning model to the second apparatus, or the like. Cases in the foregoing implementation 3 and implementation 4 are not listed one by one herein. For details, refer to the descriptions in the foregoing implementations.

In an implementation, the trained parameters corresponding to the first machine learning model and/or the identification information of the parameters may be carried in signaling. In other words, in the foregoing implementations, the trained parameters corresponding to the first machine learning model and/or the identification information of the parameters are/is sent between different apparatuses by sending signaling.

When the trained parameters corresponding to the first machine learning model are transmitted between different apparatuses by sending signaling, each piece of signaling may carry at least one group of trained parameters of the first machine learning model. Optionally, the trained parameters corresponding to the first machine learning model may be carried in one or more of the following information: downlink control information (downlink control information, DCI), uplink control information (uplink control information, UCI), sidelink control information (sidelink control information, SCI), radio resource control (radio resource control, RRC) signaling, a media access control control element (media access control control element, MAC CE), or another type of signaling. Details are not exhaustively described herein.

For example, in the foregoing implementation 1, the base station may send, to the terminal device (that is, an example of the first apparatus), DCI, RRC, or a MAC CE that carries the group of trained parameters to which the second identification information points. Correspondingly, the first apparatus may obtain, from the DCI, the RRC, or the MAC CE, the group of trained parameters to which the second identification information points.

For another example, in the foregoing implementation 1, the terminal device (that is, an example of the first apparatus) may include the group of target parameters used in the first machine learning model in SCI, RRC, or a MAC CE for sending to another terminal device (that is, an example of the second apparatus). Correspondingly, the second apparatus may obtain, from the SCI, the RRC, or the MAC CE, the group of target parameters used in the first machine learning model.

For another example, in the foregoing implementation 2, the base station may include each piece of third identification information and a group of trained parameters to which each piece of third identification information points in DCI, RRC, or a MAC CE for sending to the terminal device (that is, an example of the first apparatus). Correspondingly, the first apparatus may obtain, from the DCI, the RRC, or the MAC CE, each piece of third identification information and the group of trained parameters to which each piece of third identification information points.

For another example, in the foregoing implementation 4, the terminal device (an example of the first apparatus) may include each group of trained parameters of the first machine learning model and identification information of each group of trained parameters in UCI, RRC, or a MAC CE for sending to the base station (an example of the second apparatus). Correspondingly, the base station may obtain each group of trained parameters of the first machine learning model and the identification information of each group of trained parameters from the UCI, the RRC, or the MAC CE.

It should be noted that, the cases in which the trained parameters corresponding to the first machine learning model are carried by using signaling in the foregoing implementations are not described one by one in detail herein. For another case in which the trained parameters corresponding to the first machine learning model are carried by using signaling in the foregoing implementations, refer to the foregoing descriptions for understanding.

For example, when the at least one group of trained parameters of the first machine learning model is carried by using signaling (which is referred to as "first signaling" below for ease of description), the first signaling may carry the at least one group of parameters used in the first machine learning model and indication information corresponding to each group of parameters. The indication information corresponding to each group of parameters indicates positions, in the first machine learning model, of a plurality of parameters included in each group of parameters. Optionally, the first signaling is any one of the following: DCI, UCI, SCI, RRC, a MAC CE, another type of signaling, or the like.

For example, in the foregoing implementation 1, when the base station needs to send, to the first apparatus, the group of trained parameters to which the second identification information points, the base station may send first signaling to the first apparatus. Correspondingly, the first apparatus may receive the first signaling sent by the base station, and obtain, from the first signaling, the group of parameters used in the first machine learning model.

For another example, in the foregoing implementation 2, when the base station needs to send, to the first apparatus, the group of trained parameters to which each piece of third identification information points, the base station may send one or more pieces of first signaling to the first apparatus, where each piece of first signaling carries one piece of third identification information and a group of parameters to which the piece of third identification information points. Other cases in the foregoing implementations are not enumerated one by one herein.

In this embodiment of this application, when the at least one group of parameters of the first machine learning model is transmitted by using signaling, the signaling not only carries the at least one group of parameters, but also carries the indication information corresponding to each group of parameters. The indication information indicates the positions, in the first machine learning model, of the plurality of parameters included in each group of parameters. Therefore, after receiving the signaling, the first apparatus can understand how to use the parameters carried in the signaling, and transmit the at least one group of parameters of the first machine learning model by using the signaling. This helps reduce communication resources consumed in a parameter transmission process, and improve efficiency of the parameter transmission process.

Optionally, the indication information corresponding to each group of parameters may include a number of a layer of each parameter in each group of parameters in the first machine learning model, and a parameter value used during an operation at the layer. For example, a name of each parameter in the first signaling may be consistent with a name of each parameter in the first machine learning model, and information carried in the first signaling may include the following content:

{layer [1]: {matrix U1_1: {u11(1,1), u11(1,2), u11(2,1), u11(2,2), ...}, matrix U1_2: {u12(1,1), u12(1,2), u12(1,3), u12(2,1), ...}, vector b1_1: {b11(1), b11(2), ...}}
layer [2,3,4]: {matrix U2_1: {u21(1,1), u12(1,2), u21(2,1), u12(2,2), ...}, matrix U2_2: {u22(1,1), u22(1,2), u22(1,3), u22(2,1), ...}, vector b2_1: {b21(1), b21(2), ...}}
layer [5]: {matrix U3_1: {u31(1,1), u31(1,2), u31(1,3), ...}, matrix U3_2: {u32(1,1), u32(1,2), u33(2,1), ...}, vector b3_1: {b31(1), b31(2), ...}}}

The foregoing information indicates that parameters used by a first neural network layer in the first machine learning model include the matrix U1_1, the matrix U1_2, and the vector b1_1, a value of the matrix U1_1 is {u11(1,1), u11(1,2), u11(2,1), u11(2,2), ...}, a value of the matrix U1_2 is {u12(1,1), u12(1,2), u12(1,3), u12(2,1), ...}, and a value of the vector b1_1 is {b11(1), b11(2), ...}. Meanings of parameters used by a second neural network layer to a fifth neural network layer in the first machine learning model may be understood with reference to the foregoing descriptions. Details are not described herein again.

For more intuitive understanding of this solution, the following uses an example in which the first signaling is a MAC CE and RRC to show a specific format in which the MAC CE and the RRC carry a group of parameters of the first machine learning model. First, refer to the following Table 3. Table 3 shows a format of a group of parameters of the first machine learning model in a MAC CE.

Table 3

| R | R | R | $U_0$ | $W_0$ | $\theta_{s0}$ | $V_0$ | $\theta_{o0}$ |
|---|---|---|---|---|---|---|---|
| Matrix-$U_0$ | | | | | | | |
| Matrix-$W_0$ | | | | | | | |
| Vector-$\theta_{s0}$ | | | | | | | |
| Matrix-$V_0$ | | | | | | | |

(continued)

| Vector-$\theta_{o0}$ | | | | | | | |
|---|---|---|---|---|---|---|---|
| R | R | R | $U_1$ | $W_1$ | $\theta_{s1}$ | $V_1$ | $\theta_{o1}$ |
| Matrix-$U_1$ | | | | | | | |
| Matrix-$W_1$ | | | | | | | |
| Vector-$\theta_{s1}$ | | | | | | | |
| Matrix-$V_1$ | | | | | | | |
| Vector-$\theta_{o1}$ | | | | | | | |

R in Table 3 represents a meaningless parameter, that is, R is not used in the first machine learning model. In Table 3, that the first machine learning model includes two neural network layers is used as an example. In the first row of Table 3 (that is, the first row of the MAC CE), it is first declared that parameters used by the first neural network layer of the first machine learning model include $U_0$, $W_0$, $\theta_{s0}$, $V_0$, and $\theta_{o0}$, and values of the five parameters used by the first neural network layer of the first machine learning model are respectively shown in the second row to the sixth row. In the seventh row of Table 3 (that is, the seventh row of the MAC CE), it is declared that parameters used by the second neural network layer of the first machine learning model include $U_1$, $W_1$, $\theta_{s1}$, $V_1$, and $\theta_{o1}$, and values of the five parameters used by the second neural network layer of the first machine learning model are shown in the eighth row to the twelfth row. Because the parameters used in the first machine learning model of the first apparatus are also $U_0$, $W_0$, $\theta_{s0}$, $V_0$, $\theta_{o0}$, $U_1$, $W_1$, $\theta_{s1}$, $V_1$, and $\theta_{o1}$, after the first apparatus receives the MAC CE, a value of each parameter in the first machine learning model can be determined. It should be understood that the example in Table 3 is merely for ease of understanding of this solution, and is not intended to limit this solution.

The following describes that when one or more groups of parameters of the first machine learning model are carried by using the RRC, content carried in the RRC may be as follows:

```
AISeqConfig ::= SEQUENCE {
        matrixU SEQUENCE {
      Ui0j0, REAL,
      Ui1j1, REAL,
      ...},
        vector SEQUENCE {
      v0, REAL,
      v1, REAL,
      ...},
}
```

Herein, matrixU SEQUENCE { } represents that values of parameters in { } are all matrices, Ui0j0 represents a parameter in row i0 and column j0 of a parameter matrixU of the first machine learning model, and REAL in Ui0j0, REAL represents that a type of a value of the parameter Ui0j0 is a real number. Similarly, Ui1j1 represents a parameter in row i 1 and column j1 of the parameter matrixU of the first machine learning model, and REAL in Ui1j1, REAL represents that a type of a value of the parameter Ui1j1 is a real number. vector SEQUENCE {} represents that values of parameters in {} are all vectors, v0 is a 0th parameter of a parameter vector of the first machine learning model, REAL in v0, REAL represents that a type of a value of the parameter v0 is a real number, v1 is a 1st parameter of the parameter vector of the first machine learning model, and REAL in v1, REAL represents that a type of a value of the parameter v1 is a real number. In the foregoing manner, the RRC may carry the group of parameters of the first machine learning model, and after the RRC is obtained, a position of each parameter in the group of parameters in the first machine learning model may be further known. It should be understood that the foregoing example is merely for ease of understanding of this solution, and is not intended to limit this solution.

For more intuitive understanding of this solution, refer to FIG. 6. FIG. 6 is a schematic flowchart in which a first apparatus obtains a group of parameters used in a first machine learning model according to an embodiment of this application. 601: The first apparatus sends UCI to the base station, where the UCI carries second identification information. 602: The base station obtains a group of parameters to which the second identification information points, that is, a group of parameters used in the first machine learning model. 603: The base station obtains DUI, where the DUI carries the group of parameters to which the second identification information points and indication information corresponding to the group of parameters, and the indication information corresponding to the group of parameters indicates positions, in the first machine learning model, of a plurality of parameters included in the group of parameters. 604: The base station sends the DUI to the first apparatus. Correspondingly, the first apparatus receives the DUI. It should be noted that the UCI and the DUI in FIG. 6 may also be replaced with other types of signaling. The example in FIG. 6 is merely for ease of understanding of this solution, and is not intended to limit this solution.

When the identification information of the trained parameters corresponding to the first machine learning model is transmitted between different apparatuses by sending signaling, optionally, the identification information of the parameters is carried in any one or more of the following information: DCI, UCI, SCI, RRC signaling, a MAC CE, a physical broadcast channel (physical broadcast channel, PBCH), a physical random access channel (physical random access channel, PRACH), or another type of signaling. Details are not exhaustive herein.

For example, in the foregoing implementation 1, the terminal device (that is, an example of the first apparatus) may include the second identification information in UCI, a MAC CE, or a PRACH for sending to the base station. For another example, in the foregoing implementation 4, if the first apparatus is the base station, and the second apparatus is the terminal device, the base station may include the second identification information in DCI, a MAC CE, or a PBCH for sending to the terminal device. For another example, in the foregoing implementation 4, if both the first apparatus and the second apparatus are terminal devices, the first terminal device may include the second identification information in SCI or a MAC CE for sending to the second terminal device. It should be noted that, cases in which the identification information of the trained parameters corresponding to the first machine learning model is carried by using signaling in the foregoing implementations are not described one by one herein. For other cases in which the identification information is carried by using signaling in the foregoing implementations, refer to the foregoing descriptions for understanding.

In this embodiment of this application, in comparison with a case in which at least one group of parameters of the first machine learning model and/or identification information of each group of parameters are/is carried in a data packet for transmission, the at least one group of parameters and/or the identification information of each group of parameters are/is carried in signaling for transmission, so that transmission efficiency is higher, and fewer computer resources are consumed. In addition, a plurality of types of signaling that can be used to transmit the at least one group of parameters and/or the identification information of each group of parameters are provided in this solution, so that implementation flexibility of this solution is improved.

In another implementation, the trained parameters corresponding to the first machine learning model and/or the identification information of the parameters may be carried in a data packet. In other words, in the foregoing implementations, the trained parameters corresponding to the first machine learning model and/or the identification information of the parameters are/is sent between different apparatuses by sending a data packet.

For example, in the foregoing implementation 1, the terminal device (that is, an example of the first apparatus) may send, to the base station, a first data packet that carries the second identification information. Correspondingly, the base station may obtain the second identification information from the first data packet. For another example, the base station may send a second data packet to the terminal device (that is, an example of the first apparatus), where the second data packet carries the group of trained parameters to which the second identification information points. The terminal device may obtain, from the second data packet, the group of target parameters used in the first machine learning model. For another example, the terminal device (that is, an example of the first apparatus) may send a third data packet to another terminal device (that is, an example of the second apparatus), where the third data packet carries the group of target parameters used in the first machine learning model. The second apparatus may obtain, from the third data packet, the group of target parameters used in the first machine learning model in the first apparatus.

It should be noted that specific implementations in implementation 2, implementation 3, and implementation 4 are not described one by one herein again. For specific implementations in implementation 2, implementation 3, and implementation 4, refer to the foregoing descriptions of implementation 1 for understanding.

Optionally, in a process of performing data transmission between the first apparatus and the second apparatus, the first machine learning model may be retrained, to optimize the parameter used in the first machine learning model. The first apparatus obtains a group of updated parameters of the first machine learning model. Optionally, after obtaining the group of updated parameters of the first machine learning model, the first apparatus may send the group of updated parameters of the first machine learning model to the second apparatus.

For example, in an implementation, regardless of whether the first apparatus is a terminal device or a base station, the base station retrains the first machine learning model to obtain the group of updated parameters of the first machine learning model. In one case, if the first apparatus is the terminal device, the first apparatus may send a request to the base station, where the request is used to request the base station to retrain the first machine learning model. The base station sends the group of updated parameters of the first machine learning model to the first apparatus. Optionally, the first apparatus may further send the group of updated parameters to the second apparatus.

In another case, if the first apparatus is the base station, after obtaining the group of updated parameters of the first machine learning model, the base station may further send the group of updated parameters to the second apparatus, so that the second apparatus can determine the group of updated parameters used in the first machine learning model in the first apparatus.

In another implementation, the first apparatus retrains the first machine learning model, to obtain the group of updated parameters of the first machine learning model. Optionally, the first apparatus further sends the group of updated parameters of the first machine learning model to the second apparatus.

For example, if the first apparatus is the terminal device, and the second apparatus is the base station, after retraining the first machine learning model to obtain the group of updated parameters of the first machine learning model, the terminal device may send the group of updated parameters to the base station. For another example, if the first apparatus is the first terminal device, and the second apparatus is the second terminal device, after retraining the first machine learning model to obtain the group of updated parameters of the first machine learning model, the first terminal device may send the group of updated parameters to the second terminal device. Various cases are not exhaustive herein.

It should be noted that, for a manner of sending "the group of updated parameters of the first machine learning model" between apparatuses in the foregoing implementations, refer to the foregoing descriptions. Details are not described herein again.

402: The first apparatus obtains a value of T, where T is an integer greater than or equal to 1, and T represents a quantity of pieces of subdata included in output data of the first machine learning model.

In this embodiment of this application, T represents the quantity of pieces of subdata included in the output data of the first machine learning model. For example, if a task executed by using the first machine learning model is modulation, the output data of the first machine learning model is modulated data, and the modulated data may include T groups of modulated symbols. For another example, if a task executed by using the first machine learning model is encoding, the output data of the first machine learning model is encoded data, and the encoded data may include T groups of encoded bit data. For another example, if a task executed by using the first machine learning model is reference signal generation, the output data of the first machine learning model is a reference signal, and T may represent a length of the reference signal. For example, the length of the reference signal may indicate a quantity of symbols included in the reference signal.

403: The first apparatus obtains to-be-processed data.

404: The first apparatus determines whether a length of the to-be-processed data is less than H; and if a determining result is that the length of the to-be-processed data is less than H, proceeds to step 405; or if a determining result is that the length of the to-be-processed data is not less than H, proceeds to step 406, where H represents a length of the first data.

In this embodiment of this application, step 404 is an optional step. The first apparatus may further obtain the length of the to-be-processed data and a value of H. The length of the to-be-processed data may be K, K is an integer greater than or equal to 1, and H represents the length of the first data. In other words, H represents an expected length of input data of the first machine learning model, and H is an integer greater than or equal to 1.

After obtaining the values of K and H, the first apparatus may determine whether K is less than H; and if a determining result is that K is less than H, proceed to step 405; or if a determining result is that K is not less than H, proceed to step 406.

Optionally, the length of the to-be-processed data may be a quantity of bits of the to-be-processed data. For example, if a task executed by using the first machine learning model is encoding, the to-be-processed data is data that needs to be encoded, and the length of the to-be-processed data may be a quantity of bits of the data that needs to be encoded. For another example, if a task executed by using the first machine learning model is modulation, the to-be-processed data is data that needs to be modulated, and the length of the to-be-processed data may be a quantity of bits of the data that needs to be modulated. For another example, if a task executed by using the first machine learning model is encoding and modulation, the to-be-processed data is data that needs to be encoded and modulated, and the length of the to-be-processed data is a quantity of bits of the data that needs to be encoded and modulated. For another example, if a task executed by using the first machine learning model is reference signal generation, the to-be-processed data includes index numbers of a plurality of reference signals, and the length of the to-be-processed data is a quantity of bits of the index numbers of the plurality of reference signals.

Alternatively, if a task executed by using the first machine learning model is reference signal generation, the to-be-processed data includes index numbers of a plurality of reference signals, and the length of the to-be-processed data may be a quantity of the plurality of reference signals. A meaning of "the length of the to-be-processed data" may be flexibly determined with reference to an actual situation. This is not limited herein.

405: The first apparatus pads the to-be-processed data to obtain the first data, where the length of the first data is H.

In this embodiment of this application, step 405 is an optional step. If the first apparatus determines that the length of the to-be-processed data is less than H, the first apparatus may pad the to-be-processed data to obtain the first data. The length of the first data is H, and the first data may include the to-be-processed data and padding data. In this embodiment of this application, when the length of the to-be-processed data is less than H, the to-be-processed data is padded to obtain the first data whose length is H, and then the first data whose length is H is input into the first machine learning model. Therefore, regardless of the length of the to-be-processed data, the first machine learning model processes the first data whose length is H. This not only facilitates compatibility with the to-be-processed data of any length, but also helps reduce a data processing difficulty of the first machine learning model, to obtain second data with better performance.

In one case, the padding data may include first identification information, and the first identification information is used to identify the value of T and/or a value of K. In other words, the first identification information may be used to identify

the value of Tand the value of K, or may be used to identify the value of T, or may be used to identify the value of K. The value of T is the quantity of pieces of subdata included in the output data of the first machine learning model, K is the length of the to-be-processed data, and both T and K are integers greater than or equal to 1.

For example, after obtaining the value of Tand/or the value of K, the first apparatus may process the value of T and/or the value of K by using a first function, to obtain the first identification information. A condition that the first function needs to meet includes: A value of the first identification information is limited to a preset range, and different values of T and/or different values of K can be mapped to different values. In other words, a value generated by using the first function can uniquely identify a value of T and/or a value of K, or a value generated by using the first function can be used to distinguish between different values of T and/or different values of K.

For example, the first function may be a binary function, a linear function, or a nonlinear function. For example, an example in which the first identification information is used to identify the value of Tand the value of K is used herein. The following discloses an example of the first function:

$$f(T,K) = 1-2*((K-3)*11+(T-4))/98 \qquad (1)$$

Herein, $f(T, K)$ represents an example of the first function, and the example in formula (1) is merely for ease of understanding of this solution, and is not intended to limit this solution.

In this embodiment of this application, the first data carries the first identification information used to identify the value of Tand/or the value of K. In this case, the first machine learning model can process the first data based on the value of Tand/or the value of K, that is, based on a length of the output data of the first machine learning model and/or the length of the real to-be-processed data. This helps obtain second data with better performance based on the second data output by the first machine learning model.

Optionally, if there is still remaining space after the padding data carries the first identification information, in one case, the padding data may further carry identification information of the first apparatus. For example, if the first apparatus is a terminal device,the identification information of the first apparatus may be identification information of the terminal device; or if the first apparatus is a base station, the identification information of the first apparatus may be identification information of the base station. For example, the identification information of the first apparatus may be a radio network temporary identifier (radio network temporary identifier, RNTI), a cell (cell) identifier (identifier, ID), a physical cell identifier (physical cell identifier, PCI), or identification information of another type. Details are not exhaustive herein.

In another case, the padding data may further carry invalid information. For example, remaining space in the padding data may be padded with 0, 1, another value, or the like. The example herein is merely for ease of understanding of this solution, and is not intended to limit this solution.

For further understanding of this solution, the following discloses an example of code used when the first apparatus performs the foregoing padding operation, and the to-be-processed data is $b_0$, $b_1$, ...,$b_{K-1}$:

```
for i = 0 to H - 1
    if i < K
        c_i = 1 - 2 * b_i;
    else if i < H - 1
        c_i = 0;
    Else
        c_i = f(T, K);
    end if
end for
```

Refer to the foregoing code. It can be learned that, in a process of padding the to-be-processed data, $i$ is sequentially set to 0 to H-1. If $i$ is less than K, $b_i$ is obtained from the to-be-processed data, and $b_i$ is converted into $c_i$ and placed in the first data. $c_i$ represents the $i$ + 1th piece of data in the first data. If $i$ is greater than or equal to K and less than $H$ - 1, 0 is padded into the first data. If $i$ is equal to $H$ - 1, the first identification information is padded into the first data. For a meaning of the first identification information, refer to the foregoing descriptions. Details are not described herein again. It should be understood that the example herein is merely for ease of understanding of this solution, and is not intended to limit this solution.

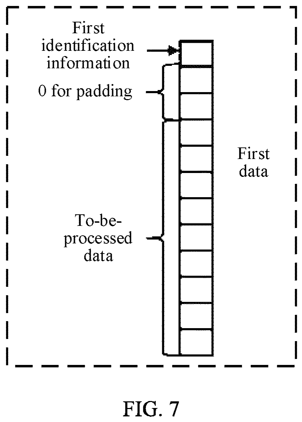

For more intuitive understanding of this solution, refer to FIG. 7. FIG. 7 is a diagram of first data according to an embodiment of this application. As shown in FIG. 7, the first data includes the to-be-processed data, 0 used for padding, and the first identification information. An example in FIG. 7 is merely for ease of understanding of this solution, and is not intended to limit this solution.

In another case, the padding data may include the identification information of the first apparatus, and does not include the first identification information. In another case, the padding data may carry only invalid information.

406: The first apparatus fuses the first identification information and the to-be-processed data to obtain the first data, where the first identification information is used to identify the value of T and/or the value of K, K is the length of the to-be-processed data, and K is an integer greater than or equal to 1.

In this embodiment of this application, step 406 is an optional step. If the first apparatus determines that the length of the to-be-processed data is equal to H, the first apparatus may further fuse the first identification information and the to-be-processed data to obtain the first data. For a meaning of the first identification information, refer to the foregoing descriptions. Details are not described herein again.

For example, "fusing the first identification information and the to-be-processed data" includes but is not limited to: The first identification information and the to-be-processed data are spliced, added, fused in another manner, or the like. This is not limited herein.

It should be noted that steps 404 to 406 are all optional steps. If steps 404 to 406 are not performed, the to-be-processed data may be directly determined as the first data. Alternatively, steps 404 and 405 may not be performed, and only step 406 is performed.

Alternatively, steps 404 and 405 may be performed, and step 406 is not performed. In this case, when determining that the length of the to-be-processed data is equal to H, the first apparatus may directly determine the to-be-processed data as the first data.

407: The first apparatus inputs the first data into the first machine learning model to obtain second data generated by the first machine learning model, where the second data includes the T pieces of subdata, the first machine learning model includes one or more modules, and one piece of subdata is obtained each time a module in the first machine learning model is invoked at least once.

In this embodiment of this application, after the first apparatus obtains the first data, in an implementation, the first apparatus may directly input the first data into the first machine learning model. In another implementation, the first apparatus may further scramble the first data by using the identification information of the first apparatus, and input scrambled first data into the first machine learning model. For a meaning of the identification information of the first apparatus, refer to the foregoing descriptions. Details are not described herein again.

"One piece of subdata is obtained each time the module in the first machine learning model is invoked at least once" indicates that one of the T pieces of subdata can be obtained each time one module in the first machine learning model is invoked at least once, or one of the T pieces of subdata can be obtained each time a plurality of modules in the first machine learning model are invoked at least once.

A function of the first machine learning model includes any one or combination of the following: encoding, modulation, or reference signal generation. For example, if the function of the first machine learning model is encoding, the T pieces of subdata represent T groups of encoded bit data, and each group of encoded bit data may include one or more pieces of bit data. For another example, if the function of the first machine learning model is modulation, the T pieces of subdata represent T groups of modulated symbols, and each group of modulated symbols may include one or more symbols. For another example, if the function of the first machine learning model is encoding and modulation, the T pieces of subdata represent T groups of encoded and modulated symbols, and each group of encoded and modulated symbols may include one or more symbols. For another example, if the function of the first machine learning model is reference signal generation, the T pieces of subdata may represent T groups of symbols in a reference signal, or the like. It should be understood that the examples herein are merely used for ease of understanding of this solution, and are not intended to limit this solution.

In this embodiment of this application, a plurality of functions of the first machine learning model are provided, application scenarios of this solution are extended, and implementation flexibility of this solution is improved.

In one case, the first machine learning model may include a first module and at least one second module. A difference between the first module and the second module includes: An initial input of the first module is the first data or scrambled first data, and an initial input of the second module is feature information of the first data (or the scrambled first data).

For example, each time the second module in the first machine learning model is invoked once, one of the T pieces of subdata can be obtained. In this case, step 407 may include: The first apparatus inputs the first data (or the scrambled first data) into the first module to obtain first subdata generated by the first module, where the first subdata is one of the T pieces of subdata. The first apparatus can obtain the feature information of the first data in a process of generating the first subdata by using the first module. The first apparatus inputs first feature information into the second module to obtain second subdata generated by the second module, where the first feature information includes feature information generated when a module in the first machine learning model is invoked last time for data processing, and the second subdata is one of the T pieces of subdata. In this embodiment of this application, the first machine learning model includes the first module and the at least one second module. An input of the first module in the first machine learning model is the entire first data, and an input of the second module is the feature information obtained when the module in the first machine learning model is invoked last time. In this case, when the second module is invoked for the first time, an input is feature information obtained when the entire first data is processed by using the first module. Therefore, the entire first data is referenced for feature information that is input into the second module each time. In other words, when each of the T pieces of subdata is generated, information about the entire first data is referenced. This helps obtain second data with better performance. In addition, one piece of second subdata in the T pieces of subdata can be obtained each time the second module is invoked once. This helps quickly obtain the T pieces of subdata included in the second data.

For an obtaining process of the "first subdata", specifically, the first apparatus may obtain, by invoking the first module one or more times, the first subdata generated by the first module. Optionally, if the first apparatus obtains, by invoking the first module a plurality of times, the first subdata generated by the first module, the first feature information that is input when the second module is invoked for the first time is feature information generated when the first module is invoked for the last time. In an implementation, the first apparatus directly outputs the first subdata after inputting the first data (or the scrambled first data) into the first module and processing the first data (or the scrambled first data) by using the first module.

For example, the first module may use a convolutional neural network, a recurrent neural network, a fully connected neural network, another type of neural network, or the like. This is not limited herein.

Optionally, a process in which the first apparatus processes the first data (or the scrambled first data) by using the first module may include: The first apparatus performs linear transformation on the first data (or the scrambled first data) by using the first module, and performs processing by using a third activation function, to obtain the feature information of the first data (or the scrambled first data); and performs linear transformation on the feature information of the first data (or the scrambled first data), and performs processing by using a fourth activation function, to obtain the first subdata generated by the first module.

For example, an activation function in the first machine learning module may be any one of the following: tanh(*x*), $\frac{x+2*x^3}{1+\mathrm{abs}(x+2*x^3)}$, max(min(*a* * *x*, +1), -1), sin(*x*), an activation function of another type, or the like. The example herein is merely used to prove implementability of this solution, and is not intended to limit this solution.

The third activation function and the fourth activation function may be a same activation function, or may be different activation functions. This may be specifically flexibly set with reference to an actual situation. This is not limited in this embodiment of this application.

In another implementation, the first apparatus inputs the first data (or the scrambled first data) into the first module and processes the first data (or the scrambled first data) by using the first module. The first apparatus obtains second feature information of the first data (or the scrambled first data) obtained in the foregoing processing process, inputs the second feature information into the first module again, and processes the second feature information by using the first module. The first apparatus repeatedly performs the step of "obtaining second feature information obtained in a process of invoking the first module last time for data processing, inputting the second feature information into the first module again, and processing the second feature information by using the first module" at least once, and uses, as the first subdata, a processing result obtained when the first module is invoked for the last time to process the second feature information.

For example, a process in which the first apparatus processes input data by using the first module each time may include: The first apparatus performs linear transformation on the input data by using the first module, and performs processing by using a third activation function, to obtain transformed input data; and performs linear transformation on the transformed input data, and performs processing by using a fourth activation function, to obtain a processing result of the first module. The input data of the first module may be the first data (or the scrambled first data), or the feature information of the first data (or the scrambled first data).

For an obtaining process of "each piece of second subdata", specifically, each time the first apparatus invokes the second module, the first apparatus inputs the first feature information into the second module, and processes the first feature information by using the second module, to obtain the second subdata generated by the second module, where the second subdata is one of the T pieces of subdata.

The first feature information is feature information generated when a module in the first machine learning model is invoked last time for data processing. For example, the first feature information may be feature information generated when the first module in the first machine learning model is invoked last time for data processing, or may be feature information generated when the second module in the first machine learning model is invoked last time for data processing.

For example, each second module may use a convolutional neural network, a recurrent neural network, a fully connected neural network, another type of neural network, or the like. This is not limited herein.

Optionally, a process in which the first apparatus processes the first feature information by using the second module each time may include: The first apparatus performs linear transformation on the first feature information by using the second module, and performs processing by using a first activation function, to obtain transformed feature information; and performs linear transformation on the transformed feature information, and performs processing by using a second activation function, to obtain second subdata generated by the second module. Both the first activation function and the second activation function are activation functions in the first machine learning model. A specific activation function used may be flexibly set with reference to an actual situation.

In this embodiment of this application, a specific implementation of data processing performed by the second module is provided. The foregoing manner is simple and easy to implement. This helps reduce computer resources consumed in a process of generating the second data. In addition, a small quantity of parameters are used in the second module shown in the foregoing manner. This helps reduce communication resources consumed when a parameter of the first machine learning model is transmitted.

For further understanding of this solution, the following discloses an example of code of generating the T pieces of subdata by the first apparatus. The T pieces of subdata include $x^{(0)}, x^{(1)}, ..., x^{(T-1)}$. In the following code, the first machine learning model includes one first module and one second module, one piece of first subdata is obtained by invoking the first module once, and T-1 pieces of second subdata are obtained by invoking the second module T-1 times.

$$s_0' = \tanh(Uc' + \theta_s');$$

$$o_0' = Vs_0' + \theta_o';$$

$$x_0 = \exp(j2\pi o_0);$$

For

$$t = 1 \text{ to } T - 1$$

$$s_t' = \tanh(Ws_{t-1}' + \theta_s');$$

$$o_t' = Vs_t' + \theta_o';$$

$$x_t = \exp(j2\pi o_t);$$

end for

Refer to the foregoing code. Parameters used in the first module include $U$, $\theta_s$, $V$, and $\theta_o$, and parameters used in the second module include $W$, $\theta_s$, $V$, and $\theta_o$. $\theta_s'$ represents transposition of $\theta_s$, and $\theta_o'$ represents transposition of $\theta_o$. In this example, values of the parameters used in the first module are the same as those of the parameters used in the second module, that is, a value of $U$ in the first module is the same as a value of $W$ in the second module. Herein, $c$ represents the first data, $c'$ represents transposition of the first data, $Uc' + \theta_s'$ represents that linear transformation is performed on transposed first data, and $s_0' = \tanh(Uc' + \theta_s')$ represents that after linear transformation is performed on the transposed first data, the third activation function is used for processing, to obtain transformed first data $s_0'$ (that is, feature information $s_0'$ of the first data). $o_0' = Vs_0' + \theta_o'$ represents that $o_0'$ is obtained after linear transformation is performed on the feature information $s_0'$ of the first data, $o_0$ represents transposition of $o_0'$, and $\exp(j2\pi o_0)$ represents that $o_0$ is processed by using the fourth activation function, to obtain the first subdata $x_0$.

For each group of T - 1 pieces of second subdata of 1 to $T$- 1, $s_{t-1}'$ represents the first feature information, that is, feature information generated when the module in the first machine learning model is invoked last time for data processing. A processing manner is similar to that of the first module, and $s'_t = \tanh(Ws'_{t-1} + \theta'_s)$ represents that after linear transformation is performed on the first feature information, the first activation function is used for processing, to obtain transformed feature information $s'_t$. $o'_t = Vs'_t + \theta'_o$ represents that $o'_t$ is obtained after linear transformation is performed on the transformed feature information $s'_t$, $o_t$ represents transposition of $o'_t$, and $\exp(j2\pi o_t)$ represents that $o_t$ is processed by using the second activation function, to obtain one piece of second subdata *xt.* The second module is repeatedly invoked T-1 times, so that T-1 pieces of second subdata can be obtained.

It should be noted that, herein, an example in which the first machine learning model includes only one first module and one second module, and parameters used in the first module and the second module are consistent is merely used for ease of understanding of this solution. In an actual application process, parameters used in the first module and the second module may be inconsistent, and the first machine learning model may include a plurality of second modules.

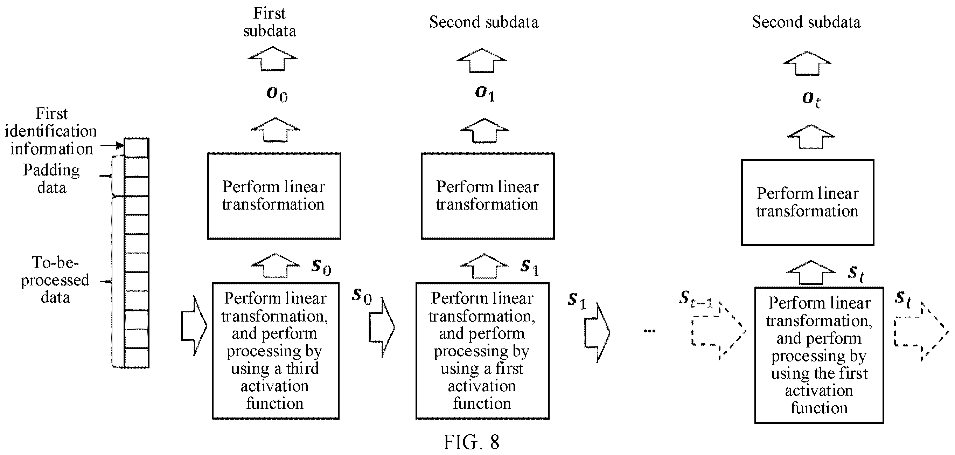

For more intuitive understanding of this solution, refer to FIG. 8. FIG. 8 is a diagram of generating T pieces of subdata by using a first machine learning model according to an embodiment of this application. In FIG. 8, an example in which one of the T pieces of subdata can be obtained each time a module (that is, the first module or the second module) in the first machine learning model is invoked once is used. As shown in FIG. 8, after the first data is input into the first machine learning model, the first module may perform linear transformation on the first data, and the third activation function is used for processing to obtain $S_0$ (that is, the feature information of the first data). Linear transformation is performed on $S_0$ to obtain $O_0$, and one piece of first subdata generated by the first module is obtained after $O_0$ is processed.

$S_0$ generated in a process of invoking the first module to process the first data is input into the second module in the first machine learning model, linear transformation is performed on $S_0$ by using the second module, the first activation function is used for processing to obtain $S_1$ (that is, updated feature information of the first data), linear transformation is performed on $S_1$ to obtain $O_1$, and a first piece of second subdata generated by the second module is obtained after $O_1$ is processed.

In a process of generating T-1 pieces of second subdata, feature information (that is, $S_{t-1}$) generated when the module in the first machine learning model is invoked last time for processing is input into the second module. For example, if the second module in the first machine learning model is invoked for the first time, feature information (an example of $S_{t-1}$) generated when the first module in the first machine learning model is invoked for processing is input into the second module. If the second module is invoked for the second time to the (T-1)$^{th}$ time, feature information (another example of $S_{t-1}$) generated when the second module is invoked last time for processing is input into the second module that is invoked this time. Linear transformation is performed on $S_{t-1}$ by using the second module, the first activation function is used for processing to obtain $S_t$ (that is, updated feature information of the first data), linear transformation is performed on $S_t$ to obtain $O_t$, and a T$^{th}$ piece of subdata generated by the second module is obtained after $O_t$ is processed. In this case, the T-1 pieces of second subdata may be obtained by invoking the second module T-1 times. The T-1 pieces of second subdata and the one piece of first subdata may form the T pieces of subdata in the second data. The example in FIG. 8 is merely for ease of understanding of this solution, and is not intended to limit this solution.

Optionally, the first machine learning model may include a plurality of second modules, and at least two of the plurality of second modules use different parameters. That is, one piece of second subdata can be generated each time the first apparatus invokes the second module once, but different second modules may be invoked in a process of generating the T-1 pieces of second data.

A meaning of "two second modules using different parameters" may include any one of the following differences: The two second modules use parameters of a same type, but parameter values used by the two second modules are not completely the same; or types of parameters used by the two second modules are not completely the same. Details are not exhaustive herein. That "the parameters used by the two second modules are the same" indicates that not only types of the parameters used by the two second modules are the same, but also values of the parameters are the same.

For example, the plurality of second modules may include a second module 1, a second module 2, and a second module 3. If the value of T is 8, seven pieces of second subdata need to be generated. Each second module may be configured to generate a same quantity (for example, 3) of pieces of second subdata. That is, the second module 1 is used when the first three pieces of second data are generated, the second module 2 is used when the fourth, fifth, and sixth pieces of second subdata are generated, and the second module 3 is used when the seventh piece of second subdata is generated.

For another example, the plurality of second modules may include a second module 1, a second module 2, and a second module 3. If the value of T is 8, seven pieces of second subdata need to be generated. A quantity of pieces of second subdata generated by each second module may alternatively be different. That is, the second module 1 is used when the first three pieces of second data are generated, the second module 2 is used when the fourth and fifth pieces of second subdata are generated, and the second module 3 is used when the sixth and seventh pieces of second subdata are generated. It should be noted that the examples herein are merely for ease of understanding of this solution, and are not intended to limit this solution.

For further understanding of this solution, the following discloses an example of code used when the first apparatus generates the T-1 pieces of second subdata by using the plurality of second modules:

For

$$t = 1 \text{ to } T - 1$$

$$s'_t = \tanh(W_{t \bmod \tau} s'_{t-1} + \theta'_s);$$

$$o'_t = V_{t \bmod \tau} s'_t + \theta'_o;$$

$$x_t = \exp(j2\pi o_t);$$

end for

For meanings of $s'_{t-1}$, *W*, $\theta'_s$, *V*, and $\theta'_o$, refer to the foregoing descriptions. Details are not described herein again. $x_t$ represents a $(t+1)^{th}$ subdata in the T pieces of subdata included in the second data. Different second modules use the same $\theta_s$ and $\theta_o$, and different second modules use different W and *V*. $W_{t \bmod \tau}$ and $V_{t \bmod \tau}$ represent that τ second modules are periodically invoked, and there are τ groups of different parameters in the τ second modules. $W_{t \bmod \tau}$ may be specifically represented as $W_0$, $W_1$, ..., and $W_{\tau-1}$, and $V_{t \bmod \tau}$ may be specifically represented as $V_0$, $V_1$, ..., and $V_{\tau-1}$. The τ groups of different parameters include $W_0$ and $V_0$, $W_1$ and $V_1$, ..., and $W_{\tau-1}$ and $V_{\tau-1}$ respectively. T pieces of second subdata are generated by using τ second modules in one period, and the τ second modules are used again in a next period. For example, the first machine learning model may include three second modules: a second module 1, a second module 2, and a second module 3. In this case, the three second modules may be cyclically invoked. After one piece of second subdata is first generated by using the second module 1 (that is, $W_1$ and $V_1$ are used), then 1 pieces of second subdata are generated by using the second module 2 (that is, $W_2$ and $V_2$ are used), and then 1 pieces of second subdata are generated by using the second module 3 (that is, $W_0$ and $V_0$ are used), the second module 1 may be invoked again, and so on. It should be understood that the example herein is merely for ease of understanding of this solution, and is not intended to limit this solution.

In this embodiment of this application, the plurality of second modules may be used in the first machine learning model, and at least two of the plurality of second modules use different parameters, that is, the T-1 pieces of second subdata are generated by different second modules. This facilitates a degree of matching between a parameter of the second module and generated second subdata, thereby helping obtain second data with better performance.

In another case, the first machine learning model may include a first module and at least one third module. A difference between the first module and the third module includes: An initial input of the first module is the first data or scrambled first data, and an initial input of the third module is feature information of the first data (or the scrambled first data). Meanings of the "third module" and the "second module" are similar. For understanding, refer to the foregoing descriptions. Details are not described herein again.

For example, each time the third module in the first machine learning model is invoked a plurality of times, one of the T pieces of subdata can be obtained. In this case, step 407 may include: The first apparatus inputs the first data (or the scrambled first data) into the first module to generate first subdata by using the first module. The first subdata is one of the T pieces of subdata. For a specific implementation of the foregoing step, refer to the foregoing descriptions. Details are not described herein again. The first apparatus invokes the third module a plurality of times to obtain third subdata generated by the third module, where the third subdata is one of the T pieces of subdata, an input of the third module includes feature information of the first data, and the feature information of the first data (or the scrambled first data) is updated a plurality of times in a process of invoking the third module a plurality of times.

A "process of processing the input data by the third module" is similar to the "process of processing the input data by the second module", and a difference lies in that the first apparatus uses a processing result generated by the second module as one piece of second subdata each time the second module is invoked once. However, the first apparatus needs to invoke the third module a plurality of times, and update the feature information of the first data (or the scrambled first data) a plurality of times in a process of invoking the third module a plurality of times, and a processing result obtained by invoking the third module for the last time is used as one piece of third subdata. The third subdata, the second subdata, and the first subdata are all subdata included in the second data. For meanings of the subdata, refer to the foregoing descriptions. Details are not described herein again.

For example, the first apparatus inputs the feature information of the first data (or the scrambled first data) into the third module, and processes the first data by using the third module. The foregoing processing process includes updating the feature information of the first data. The first apparatus inputs updated feature information of the first data (or the scrambled first data) into the third module again, and processes the updated feature information of the first data (or the scrambled first data) by using the third module again. The foregoing processing process includes updating the feature information of the first data (or the scrambled first data) again. The first apparatus repeats the foregoing operations at least once, and when a quantity of times of processing the feature information of the first data (or the scrambled first data) by using the third module reaches a preset quantity, one piece of third subdata generated by the third module is obtained.

For further understanding of this solution, the following discloses an example of code used when the third module is used to generate one piece of third subdata.

$$\text{For } t = 1 \text{ to } \mathrm{T} - 1$$
$$\text{For } l = 1 \text{ to } \mathrm{N}$$
$$s'_{tl} = \tanh(Ws'_{tl-1} + \theta'_s);$$
$$\text{end for}$$
$$o' = Vs'_{tN} + \theta'_o$$
$$\mathrm{x_t} = \exp(j2\pi o)$$
$$\text{end for}$$

For meanings of $W$, $\theta'_s$, $V$, $\theta'_o$, and xt, refer to the foregoing descriptions. Details are not described herein again. $s'_{tl-1}$ represents feature information of the first data generated when the third module is invoked last time, $s'_{tN}$ represents updated feature information of the first data generated after the feature information of the first data is updated N times, $x_t$ represents one piece of third subdata generated after the third module is invoked N times, and N is an integer greater than or equal to 2. The example herein is merely for ease of understanding of this solution, and is not intended to limit this solution.

In this embodiment of this application, only after the third module is invoked a plurality of times to update the feature information of the first data a plurality of times, one piece of third subdata is generated based on final updated feature information of the first data. This helps more thoroughly understand the first data after the first data is updated a plurality of times, so that subdata with better performance is generated.

Optionally, a size of a parameter in the first machine learning model is related to the value of H and a value of G, H is the length of the first data, and G is a length of each of the T pieces of subdata.

For example, if the function of the first machine learning model is encoding, the T pieces of subdata represent T groups of encoded bit data, and G represents a quantity of bits in each group of encoded bit data. For another example, if the function of the first machine learning model is modulation, the T pieces of subdata represent T groups of modulated symbols, and G represents a quantity of symbols in each group of modulated symbols. For another example, if the function of the first machine learning model is encoding and modulation, the T pieces of subdata represent T groups of modulated symbols, and G represents a quantity of symbols in each group of modulated symbols. For another example, if the function of the first machine learning model is reference signal generation, the T pieces of subdata may represent T groups of symbols in the reference signal, and G represents a quantity of symbols in each group of symbols, or the like. It should be understood that the examples herein are merely used for ease of understanding of this solution, and are not intended to limit this solution.

For example, the value of H is 12, the value of G is 12, and parameters used in the first machine learning model may include $U$, $W$, $\theta_s$, $V$, and $\theta_o$. In this case, $U \in \mathbb{R}^{12\times12}, W \in \mathbb{R}^{12\times12}, \theta_s \in \mathbb{R}^{1\times12}, V \in \mathbb{R}^{12\times12}, \theta_o \in \mathbb{R}^{1\times12}$ , that is, U is a matrix of 12 times 12, a size of U is that both a length and a width are 12, a size of W and a size of V are the same as the size of U, $\theta_s$ is a vector of 1 times 12, a size of $\theta_s$ is that a width is l and a length is 12, and a size of $\theta_o$ is the same as the size of $\theta_s$.

For another example, the value of H is 6, the value of G is 6, and parameters used in the first machine learning model may include $U$, $W$, $\theta_s$, $V$, *and* $\theta_o$. In this case, $U \in \mathbb{R}^{6\times6}, W \in \mathbb{R}^{6\times6}, \boldsymbol{\theta}_s \in \mathbb{R}^{1\times6}, U \in \mathbb{R}^{6\times6}, \boldsymbol{\theta}_o \in \mathbb{R}^{1\times6}$ , that is, U is a matrix of 6 times 6, a size of U is that both a length and a width are 6, a size of W and a size of V are the same as the size of U, $\theta_s$ is a vector of 1 times 6, a size of $\theta_s$ is that a width is 1 and a length is 6, and a size of $\theta_o$ is the same as the size of $\theta_s$.

For another example, the value of H is 12, the value of G is 6, and parameters used in the first machine learning model may include *U, W,* $\theta_s$, *V,* and $\theta_o$. In this case, $U \in \mathbb{R}^{12\times 12}, W \in \mathbb{R}^{12\times 12}, \boldsymbol{\theta}_s \in \mathbb{R}^{1\times 12}, V \in \mathbb{R}^{12\times 6}, \boldsymbol{\theta}_o \in \mathbb{R}^{1\times 6}$ . For explanations of sizes of *W,* $\theta_s$, *V,* and $\theta_o$, refer to the foregoing descriptions. Details are not described herein again. It should be noted that the examples herein are merely for ease of understanding of this solution, and are not intended to limit this solution.

In this embodiment of this application, the size of the parameter in the first machine learning model is designed based on the length of the first data and the length of each of the T pieces of subdata. This helps reduce a quantity of parameters in the first machine learning model while meeting an output requirement, and helps further reduce communication resources consumed for transmitting the parameter in the first machine learning model.

408: The first apparatus determines a to-be-sent signal based on the second data.

In this embodiment of this application, after generating the second data by using the first machine learning model, the first apparatus may further determine the to-be-sent signal based on the second data. For example, if the function of the first machine learning model is encoding, the second data is encoded data, and the first apparatus further needs to modulate the second data to obtain the to-be-sent signal.

For another example, if the function of the first machine learning model is modulation, the second data is modulated data, and the first apparatus may further perform rate matching on the second data in a truncation manner, to obtain the to-be-sent signal.

For another example, if the function of the first machine learning model is encoding and modulation, the second data is encoded and modulated data, and the first apparatus may further perform rate matching on the second data in a truncation manner, to obtain the to-be-sent signal.

For another example, if the function of the first machine learning model is reference signal generation, the second data is a reference signal, and the first apparatus may determine the reference signal as the to-be-sent signal.

It should be noted that the first apparatus may further perform another operation in a process of obtaining the second data and determining the to-be-sent signal based on the second data. This is not limited herein.

409: The first apparatus sends the to-be-sent signal to the second apparatus.

410: The second apparatus obtains the second data, where the second data includes the T pieces of subdata, T is an integer greater than or equal to 1, the second data is generated by the first machine learning model in the first apparatus, the first machine learning model includes the one or more modules, and one piece of subdata is obtained each time the module in the first machine learning model is invoked at least once.

In this embodiment of this application, in some application scenarios, if the function of the first machine learning model is encoding and/or modulation, after obtaining a received signal corresponding to the to-be-sent signal, the second apparatus may denoise the received signal, and obtain the received second data (that is, the estimated second data) from a denoised received signal. For a meaning of the second data, refer to the foregoing descriptions. Details are not described herein again.

For example, if the second data is encoded data, that is, the function of the first machine learning model is encoding, the received second data is obtained after the denoised received signal is demodulated. For another example, if the second data is modulated data, that is, the function of the first machine learning model is modulation, or the function of the first machine learning model is encoding and modulation, the denoised received signal may be directly determined as the second data.

In some other application scenarios, if the function of the first machine learning model is reference signal generation, after obtaining the received signal (that is, the received second data) corresponding to the to-be-sent signal, the second apparatus may determine estimated channel information based on the received signal.

411: The second apparatus generates the first data based on the second data.

In this embodiment of this application, after obtaining the received second data, the second apparatus may generate the estimated first data based on the received second data. Optionally, the second apparatus may obtain the group of parameters used in the first machine learning model in the first apparatus. For a specific implementation of the foregoing steps, refer to the descriptions in step 401. The second apparatus may demodulate and/or decode the second data based on the group of parameters used in the first machine learning model in the first apparatus, to generate the estimated first data.

For example, in an implementation, that the second apparatus demodulates and/or decodes the second data based on the group of parameters used in the first machine learning model in the first apparatus may include: After obtaining the group of parameters used in the first machine learning model, the second apparatus may determine operations performed by the first apparatus on the first data by using the first machine learning model, and may perform an inverse operation on the second data by using an estimation algorithm, to implement demodulation and/or decoding on the second data. The inverse operation is an inverse operation of the operations performed on the first data by using the first machine learning model.

For example, the estimation algorithm may be any one of the following: a maximum likelihood estimation algorithm, maximum posterior probability estimation, or an estimation algorithm of another type. The examples herein are merely for ease of understanding of this solution, and are not intended to limit this solution.

In another implementation, that the second apparatus demodulates and/or decodes the second data based on the group of parameters used in the first machine learning model in the first apparatus may include: After obtaining the group of parameters used in the first machine learning model, the second apparatus may obtain a second machine learning model corresponding to the first machine learning model, input the second data into the second machine learning model, and demodulate and/or decode the second data by using the second machine learning model. It should be noted that, the second apparatus may alternatively obtain the estimated first data in another manner. The example herein is merely used to prove implementability of this solution, and is not intended to limit this solution.

2. Training phase

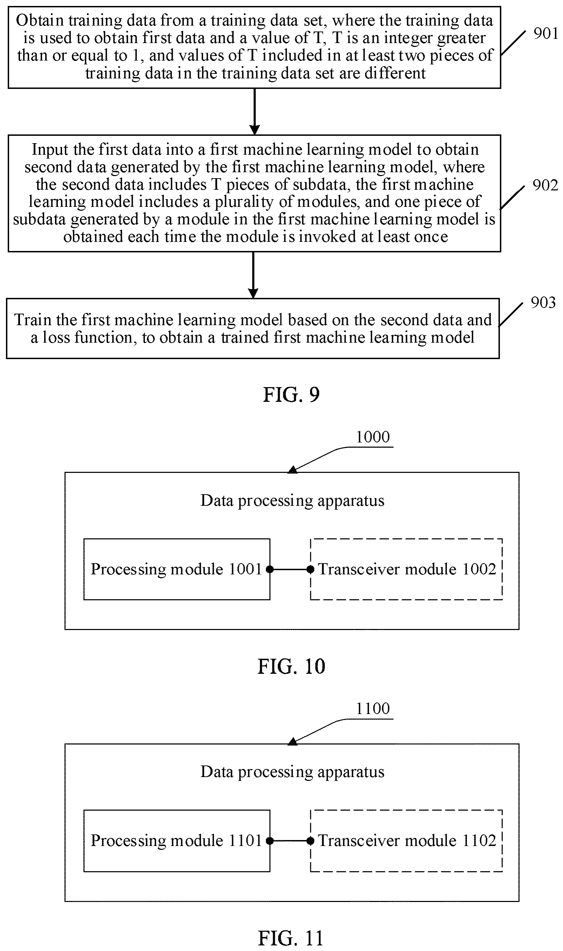

Specifically, refer to FIG. 9. FIG. 9 is a diagram of a model training method according to an embodiment of this application. As shown in FIG. 9, the model training method includes steps 901 to 903.

901: Obtain training data from a training data set, where the training data is used to obtain first data and a value of T, T is an integer greater than or equal to 1, and values of T included in at least two pieces of training data in the training data set are different.

In this embodiment of this application, there may be the training data set in a training apparatus. In each training process, the training apparatus may obtain one or more pieces of training data from the training data set. Each piece of training data may include a value of T, T represents a quantity of pieces of subdata included in output data of a first machine learning model, and values of T included in at least two pieces of training data in the training data set are different.

For example, each piece of training data may further include to-be-processed data. The training apparatus may directly determine the to-be-processed data as the first data; or may obtain the first data based on the to-be-processed data in the manner shown in steps 403 to 406 in the embodiment corresponding to FIG. 4. For a specific implementation, refer to the descriptions in the embodiment corresponding to FIG. 4. Meanings of nouns in step 901 may also be understood with reference to the descriptions in the embodiment corresponding to FIG. 4. Details are not described herein again.

902: Input the first data into the first machine learning model to obtain second data generated by the first machine learning model, where the second data includes T pieces of subdata, the first machine learning model includes a plurality of modules, and one piece of subdata generated by a module in the first machine learning model is obtained each time the module is invoked at least once.

In this embodiment of this application, the training apparatus inputs the first data into the first machine learning model to obtain the second data generated by the first machine learning model. For a specific implementation of step 902 and meanings of nouns in step 902, refer to the descriptions in step 407 in the embodiment corresponding to FIG. 4. Details are not described herein again. It should be noted that the training apparatus in steps 901 and 902 may be a terminal device, or may be a base station, and may be specifically flexibly set according to an actual situation.

903: Train the first machine learning model based on the second data and a loss function, to obtain a trained first machine learning model.

In this embodiment of this application, after obtaining the second data, the training apparatus may train the first machine learning model based on the second data and the loss function, to obtain the trained first machine learning model. It should be noted that step 903 may be performed by one device, or may be performed by different devices.

In an implementation, step 903 is performed by one device, and the training apparatus in step 903 may be a terminal device, or may be a base station. In one case, a function of the first machine learning model includes encoding and/or modulation, and step 903 includes: denoising a received signal corresponding to a to-be-sent signal to obtain a denoised received signal, and demodulating and/or decoding the denoised received signal to obtain estimated data corresponding to the to-be-processed data; and training the first machine learning model based on the estimated data and a first loss function, where the first loss function indicates a similarity between the estimated data and the to-be-processed data.

Specifically, in an implementation, the function of the first machine learning model is modulation. After obtaining the second data (that is, modulated data), the training apparatus may directly determine the second data as the to-be-sent signal. The training apparatus obtains the received signal corresponding to the to-be-sent signal, denoises the received signal to obtain the denoised received signal, and demodulates the denoised received signal to obtain the estimated data corresponding to the to-be-processed data. The training apparatus generates the similarity between the to-be-processed data and the estimated data, that is, obtains a function value of the first loss function, and updates a weight parameter of the first machine learning model by using the function value of the first loss function, so that the first machine learning model is trained once. For example, the first loss function may be a cross entropy loss function, an L1 loss function, another type of loss function, or the like, and may be specifically flexibly determined with reference to an actual application scenario. This is not limited in embodiments of this application.

For example, that the training apparatus obtains the received signal corresponding to the to-be-sent signal may include: The training apparatus multiplies the to-be-sent signal by a channel matrix, and adds a result of the multiplication to noise, to obtain the received signal. The foregoing steps are used to simulate a process in which the to-be-sent signal is transmitted through a channel.

It should be noted that, in a process of training the first machine learning model a plurality of times, a same channel matrix and same noise may be used, or different channel matrices and/or different noise may be used, and the different channel matrices and/or different noise are/is used to simulate channel environments with different signal-to-noise ratios.

In another implementation, the function of the first machine learning model is encoding. After obtaining the second data (that is, encoded data), the training apparatus may modulate the second data to obtain the to-be-sent signal. The training apparatus obtains the received signal corresponding to the to-be-sent signal, denoises the received signal to obtain the denoised received signal, and demodulates and decodes the denoised received signal to obtain the estimated data corresponding to the to-be-processed data in the training data. The training apparatus trains the first machine learning model based on the to-be-processed data, the estimated data, and the first loss function. For specific implementations of the foregoing steps and "the training apparatus obtains the received signal corresponding to the to-be-sent signal", refer to the foregoing descriptions. Details are not described herein again.

In another implementation, the function of the first machine learning model is modulation. After obtaining the second data (that is, modulated data), the training apparatus may perform rate matching on the second data in a truncation manner, to obtain the to-be-sent signal. The training apparatus obtains the received signal corresponding to the to-be-sent signal, denoises the received signal to obtain the denoised received signal, and demodulates the denoised received signal to obtain the estimated data corresponding to the to-be-processed data in the training data. For subsequent steps performed by the training apparatus, refer to the foregoing descriptions. Details are not described herein again.

In another implementation, the function of the first machine learning model is encoding and modulation. After obtaining the second data (that is, encoded and modulated data), the training apparatus may perform rate matching on the second data in a truncation manner, to obtain the to-be-sent signal. The training apparatus obtains the received signal corresponding to the to-be-sent signal, denoises the received signal to obtain the denoised received signal, and demodulates and decodes the denoised received signal to obtain the estimated data corresponding to the to-be-processed data in the training data. For subsequent steps performed by the training apparatus, refer to the foregoing descriptions. Details are not described herein again.

In another case, if a function of the first machine learning model is reference signal generation, the second data is a reference signal. The training apparatus may generate a received reference signal corresponding to the reference signal, and generate predicted channel information based on the received reference signal corresponding to the reference signal. A specific implementation in which "the training apparatus generates the received reference signal corresponding to the reference signal" is similar to a specific implementation in which "the training apparatus generates the received signal corresponding to the to-be-sent signal". A difference lies in that the "to-be-sent signal" is replaced with the "reference signal", and the "received signal" is replaced with the "received reference signal". Details are not described herein again.

The training apparatus trains the first machine learning model based on a second loss function, where the second loss function indicates a similarity between the predicted channel information and correct channel information. For example, the training apparatus calculates the similarity between the predicted channel information and the correct channel information, to obtain a function value of the second loss function, and updates a weight parameter of the first machine learning model by using the function value of the second loss function, so that the first machine learning model is trained once.

In another implementation, step 903 is jointly performed by two training apparatuses (which are referred to as a first training apparatus and a second training apparatus below for ease of description). For example, the first training apparatus may be a base station, and the second training apparatus is a terminal device that requests the base station to retrain the first machine learning model. For another example, the first training apparatus may be a first apparatus, and the second training apparatus may be a second apparatus.

In one case, the function of the first machine learning model includes encoding and/or modulation. Compared with performing step 903 by one device, a difference in this implementation mainly lies in an implementation of "obtaining the received signal corresponding to the to-be-sent signal". For example, after obtaining the to-be-sent signal based on the second data, the first training apparatus sends the to-be-sent signal to the second training apparatus. The second training apparatus receives the received signal. Then, the second training apparatus obtains estimated data corresponding to the to-be-processed data; and trains the first machine learning model based on the estimated data and a first loss function.

In this embodiment of this application, a specific implementation of training the first machine learning model when the function of the first machine learning model includes encoding and/or modulation is provided, thereby reducing implementation difficulty of this solution. In addition, the loss function uses the similarity between the estimated data and the to-be-processed data. In other words, an objective of the loss function is to obtain estimated data with better performance. The loss function better meets an actual requirement for sending data between apparatuses. Therefore, the second data output by the trained first machine learning model better meets an actual requirement.

In another case, the function of the first machine learning model is reference signal generation. Compared with performing step 903 by one device, a difference in this implementation mainly lies in an implementation of "obtaining the received reference signal corresponding to the reference signal". For example, after obtaining the reference signal, the first training apparatus sends the reference signal to the second training apparatus. After obtaining the received reference signal, the second training apparatus generates predicted channel information based on the received reference signal. The second training apparatus trains the first machine learning model based on the loss function.

In this embodiment of this application, a specific implementation of training the first machine learning model when the function of the first machine learning model is reference signal generation is further provided. This extends application scenarios of this solution, and improves implementation flexibility of this solution.

The training apparatus repeatedly performs steps 901 to 903, to perform iterative training on the first machine learning model until a convergence condition of the first loss function is met, so as to obtain a group of trained parameters of the first machine learning model.

In addition, the training apparatus may further separately train the first machine learning model by using a plurality of different training data sets, to obtain a plurality of groups of trained parameters of the first machine learning model.

In embodiments of this application, not only the implementation of the inference phase of the first machine learning model is provided, but also the implementation of the training phase of the first machine learning model is provided, reducing implementation difficulty of this solution.

Based on the embodiments corresponding to FIG. 1 to FIG. 9, refer to FIG. 10. FIG. 10 is a diagram of a data processing apparatus according to an embodiment of this application. The data processing apparatus 1000 can implement functions of the first apparatus in the foregoing method embodiments, and therefore can also achieve the beneficial effects of the foregoing method embodiments. The data processing apparatus 1000 may include a processing module 1001. The processing module 1001 is configured to obtain a value of T, where T is an integer greater than or equal to 1, and T represents a quantity of pieces of subdata included in output data of a first machine learning model; and the processing module 1001 is further configured to input first data into the first machine learning model to obtain second data generated by the first machine learning model, where the second data includes the T pieces of subdata, the first machine learning model includes one or more modules, and one piece of subdata is obtained each time a module in the first machine learning model is invoked at least once.

Optionally, a function of the first machine learning model includes any one or combination of the following: encoding, modulation, or reference signal generation.

Optionally, the plurality of modules in the first machine learning model include a first module and at least one second module, and the processing module 1001 is specifically configured to: input the first data into the first module to obtain first subdata generated by the first module, where the first subdata is one of the T pieces of subdata; and input first feature information into the second module to obtain second subdata generated by the second module, where the first feature information includes feature information generated when a module in the first machine learning model is invoked last time for data processing, the second subdata is one of the T pieces of subdata, and the module in the first machine learning model that is invoked last time is the first module or the second module.

Optionally, the plurality of modules in the first machine learning model include a first module and at least one third module, and the processing module 1001 is specifically configured to: input the first data into the first module to generate first subdata by using the first module, where the first subdata is one of the T pieces of subdata, and a process of generating the first subdata by using the first module includes performing feature extraction on the first data; and invoke the third module a plurality of times to obtain third subdata generated by the third module, where the third subdata is one of the T pieces of subdata, an input of the third module includes feature information of the first data, and the feature information of the first data is updated a plurality of times in a process of invoking the third module a plurality of times.

Optionally, the processing module 1001 is specifically configured to: perform linear transformation on the first feature information by using the second module, and perform processing by using a first activation function, to obtain transformed feature information; and perform linear transformation on the transformed feature information, and perform processing by using a second activation function, to obtain the second subdata.

Optionally, the at least one second module includes a plurality of second modules, and at least two of the plurality of second modules use different parameters.

Optionally, the processing module 1001 is further configured to obtain to-be-processed data and a value of H, where H is an integer greater than or equal to 1, and H represents a length of the first data; and the processing module 1001 is further configured to: if a length of the to-be-processed data is less than H, pad the to-be-processed data to obtain the first data, where the length of the first data is H.

Optionally, the first data includes the to-be-processed data and padding data, the padding data includes first identification information, the first identification information is used to identify the value of T and/or a value of K, K is the length of the to-be-processed data, and K is an integer greater than or equal to 1.

Optionally, a size of a parameter in the first machine learning model is related to the value of H and a value of G, and G is a length of each piece of subdata.

Optionally, a parameter corresponding to the first machine learning model is carried in one or more of the following information: downlink control information DCI, uplink control information UCI, sidelink control information SCI, radio resource control RRC signaling, or a media access control control element MAC CE; and/or identification information of the parameter is carried in any one or more of the following information: the DCI, the UCI, the SCI, the RRC signaling, the MAC CE, a physical broadcast channel PBCH, or a physical random access channel PRACH.

Optionally, the data processing apparatus 1000 is used in a first apparatus, a second apparatus is a receiver of the second data, and the second apparatus has a plurality of groups of parameters corresponding to the first machine learning model and identification information of each group of parameters. Refer to FIG. 10. The data processing apparatus 1000 may further include a transceiver module 1002, configured to send second identification information to the second apparatus, where the second identification information indicates a group of parameters used in the first machine learning model in the first apparatus.

Refer to FIG. 11. FIG. 11 is another diagram of a data processing apparatus according to an embodiment of this application. The data processing apparatus 1100 can implement functions of the second apparatus in the foregoing method embodiments, and therefore can also achieve the beneficial effects of the foregoing method embodiments. The data processing apparatus 1100 may include a processing module 1101. The processing module 1101 is configured to: obtain second data; and generate first data based on the second data. The second data includes T pieces of subdata, T is an integer greater than or equal to 1, the second data is generated by a first machine learning model in a first apparatus, the first machine learning model includes one or more modules, and one piece of subdata is obtained each time a module in the first machine learning model is invoked at least once.

In a possible implementation, a parameter corresponding to the first machine learning model is carried in one or more of the following information: downlink control information DCI, uplink control information UCI, sidelink control information SCI, radio resource control RRC signaling, or a media access control control element MAC CE; and/or identification information of the parameter is carried in any one or more of the following information: the DCI, the UCI, the SCI, the RRC signaling, the MAC CE, a physical broadcast channel PBCH, or a physical random access channel PRACH.

In a possible implementation, the data processing apparatus is used in a second apparatus, the second apparatus has third data, and the third data includes a plurality of groups of parameters corresponding to the first machine learning model and identification information of each group of parameters. Refer to FIG. 11. The data processing apparatus 1100 may further include a transceiver module 1102, configured to receive second identification information sent by the first apparatus. The processing module 1101 is further configured to determine, based on the second identification information and the third data, a group of parameters used in the first machine learning model in the first apparatus. The processing module 1101 is specifically configured to generate the first data based on the group of parameters used in the first machine learning model in the first apparatus and the second data.

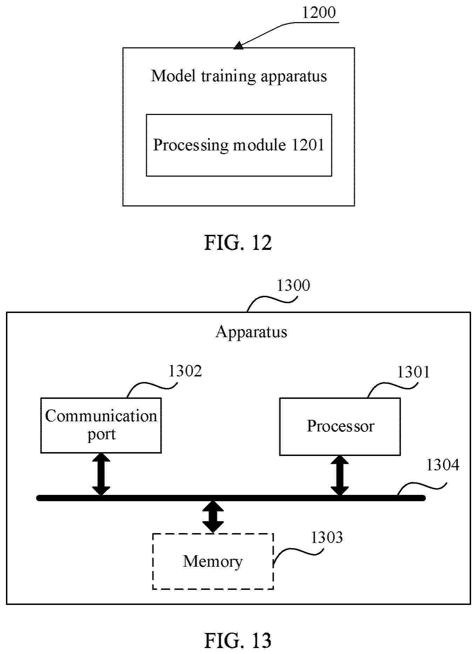

Refer to FIG. 12. FIG. 12 is a diagram of a model training apparatus according to an embodiment of this application. The model training apparatus 1200 can implement functions of the model training apparatus in the foregoing method embodiments, and therefore can also achieve the beneficial effects of the foregoing method embodiments. The model training apparatus 1200 may include a processing module 1201. The processing module 1201 is configured to obtain training data from a training data set, where the training data is used to obtain first data and a value of T, T is an integer greater than or equal to 1, and values of T included in at least two pieces of training data in the training data set are different; the processing module 1201 is further configured to input the first data into the first machine learning model to obtain second data generated by the first machine learning model, where the second data includes the T pieces of subdata, the first machine learning model includes a plurality of modules, and one piece of subdata generated by a module in the first machine learning model is obtained each time the module is invoked at least once; and the processing module 1201 is further configured to train the first machine learning model based on the second data and a loss function, to obtain a trained first machine learning model.

In a possible implementation, a function of the first machine learning model includes any one or combination of the following: encoding, modulation, or reference signal generation.

In a possible implementation, the plurality of modules in the first machine learning model include a first module and at least one second module, and the processing module 1201 is specifically configured to: input the first data into the first module to obtain first subdata generated by the first module, where the first subdata is one of the T pieces of subdata; and input first feature information into the second module to obtain second subdata generated by the second module, where the first feature information includes feature information generated when a module in the first machine learning model is invoked last time for data processing, the second subdata is one of the T pieces of subdata, and the module in the first machine learning model that is invoked last time is the first module or the second module.

In a possible implementation, the processing module 1201 is further configured to obtain to-be-processed data from the training data; the processing module 1201 is further configured to obtain a value of H, where H is an integer greater than or equal to 1, and H represents a length of the first data; and the processing module 1201 is further configured to: if a length of the to-be-processed data is less than H, pad the to-be-processed data to obtain the first data, where the length of the first data is H.

In a possible implementation, when the function of the first machine learning model includes encoding and/or modulation, the second data is used to determine a to-be-sent signal, and the processing module 1201 is specifically configured to: demodulate and/or decode a received signal corresponding to the to-be-sent signal to obtain estimated data corresponding to the to-be-processed data; and train the first machine learning model based on the estimated data and the loss function, where the loss function indicates a similarity between the estimated data and the to-be-processed data.

In a possible implementation, when the second data is a reference signal, based on the second data and the loss function, the processing module 1201 is specifically configured to: generate predicted channel information based on a received reference signal corresponding to the reference signal; and train the first machine learning model based on the loss function, where the loss function indicates a similarity between the predicted channel information and correct channel information.

Refer to FIG. 13. FIG. 13 is a diagram of an apparatus according to an embodiment of this application. The communication apparatus 1300 may be specifically an apparatus used as the terminal device in the foregoing embodiments. An example shown in FIG. 13 is that the terminal device is implemented by using a terminal device (or a component in the terminal device).

In a diagram of a possible logical structure of the communication apparatus 1300, the communication apparatus 1300 may include but is not limited to at least one processor 1301 and a communication port 1302.

Optionally, the apparatus may further include at least one of a memory 1303 and a bus 1304. In this embodiment of this application, the at least one processor 1301 is configured to control and process an action of the communication apparatus 1300.

In addition, the processor 1301 may be a central processing unit, a general-purpose processor, a digital signal processor, an application-specific integrated circuit, a field programmable gate array or another programmable logic device, a transistor logic device, a hardware component, or any combination thereof. The processor may implement or execute logical blocks, modules, and circuits in various examples described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing described system, apparatus, and unit, refer to a corresponding process in the foregoing method embodiment. Details are not described herein again.

It should be noted that when the first apparatus, the second apparatus, or the training device in the foregoing embodiments is specifically represented as a terminal device, the apparatus 1300 shown in FIG. 13 may be used to implement the steps implemented by the terminal device in the foregoing method embodiments. For a specific implementation in which the apparatus 1300 shown in FIG. 13 performs the foregoing steps, refer to the descriptions in the foregoing method embodiments. Details are not described herein again.

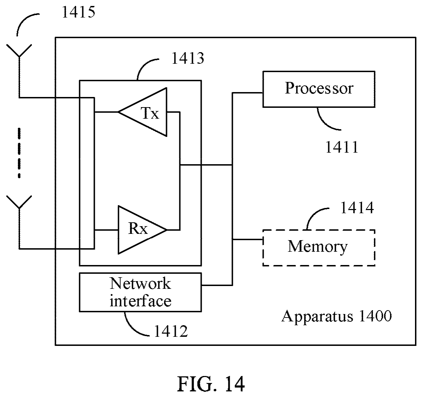

Refer to FIG. 14. FIG. 14 is another diagram of an apparatus according to an embodiment of this application. The apparatus 1400 may be specifically an apparatus used as the network device in the foregoing embodiments. An example shown in FIG. 14 is that the network device is implemented by using a network device (or a component in the network device). That is, when the first apparatus, the second apparatus, or the training device in the foregoing embodiments is specifically represented as a network device, the apparatus 1400 shown in FIG. 14 may be used for implementation. For example, when the first apparatus, the second apparatus, or the training device is a base station, the apparatus 1400 shown in FIG. 14 may be used for implementation.

For a structure of the communication apparatus, refer to the structure shown in FIG. 14. The apparatus 1400 includes at least one processor 1411 and at least one network interface 1412. Further, optionally, the communication apparatus further includes at least one memory 1414, at least one transceiver 1413, and one or more antennas 1415. The processor 1411, the memory 1414, the transceiver 1413, and the network interface 1412 are connected, for example, by using a bus. In this embodiment of this application, the connection may include various interfaces, transmission lines, buses, or the like. This is not limited in this embodiment. The antenna 1415 is connected to the transceiver 1413. The network interface 1412 is configured to enable the communication apparatus to communicate with another communication device through a communication link. For example, the network interface 1412 may include a network interface between the communication apparatus and a core network device, for example, an S1 interface. The network interface may include a network interface between the communication apparatus and another communication apparatus (for example, another network device or core network device), for example, an X2 or Xn interface.

The processor 1411 is mainly configured to: process a communication protocol and communication data, control the entire communication apparatus, execute a software program, and process data of the software program, for example, configured to support the communication apparatus in performing an action described in the embodiments. The communication apparatus may include a baseband processor and a central processing unit. The baseband processor is mainly configured to process the communication protocol and the communication data. The central processing unit is mainly configured to control the entire terminal device, execute the software program, and process the data of the software program. The processor 1411 in FIG. 14 may integrate functions of the baseband processor and the central processing unit. A person skilled in the art may understand that the baseband processor and the central processing unit may alternatively be independent processors, and are interconnected by using a technology such as a bus. A person skilled in the art may understand that the terminal device may include a plurality of baseband processors to adapt to different network standards, the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 1414 may exist independently, and is connected to the processor 1411. Optionally, the memory 1414 and the processor 1411 may be integrated together, for example, integrated into one chip. The memory 1414 can store program code for performing the technical solutions in embodiments of this application, and execution is controlled by the processor 1411. Various types of executed computer program code may also be considered as a driver of the processor 1411.

FIG. 14 shows only one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 1413 may be configured to support receiving or sending of a radio frequency signal between the communication apparatus and a terminal, and the transceiver 1413 may be connected to the antenna 1415. The transceiver 1413 includes a transmitter Tx and a receiver Rx. Specifically, the one or more antennas 1415 may receive a radio frequency signal, and the receiver Rx of the transceiver 1413 is configured to receive the radio frequency signal from the antenna, convert the radio frequency signal into a digital baseband signal or a digital medium-frequency signal, and provide the digital baseband signal or the digital medium-frequency signal to the processor 1411, so that the processor 1411 performs further processing, for example, demodulation processing and decoding processing, on the digital baseband signal or the digital medium-frequency signal. In addition, the transmitter Tx in the transceiver 1413 is further configured to receive a modulated digital baseband signal or digital medium-frequency signal from the processor 1411, convert the modulated digital baseband signal or digital medium-frequency signal into a radio frequency signal, and send the radio frequency signal by using the one or more antennas 1415. Specifically, the receiver Rx may selectively perform one or more levels of down-mixing processing and analog-to-digital conversion processing on the radio frequency signal to obtain the digital baseband signal or the digital medium-frequency signal. A sequence of the down-mixing processing and the analog-to-digital conversion processing is adjustable. The transmitter Tx may selectively perform one or more levels of up-mixing processing and digital-to-analog conversion processing on the modulated digital baseband signal or digital medium-frequency signal to obtain the radio frequency signal. A sequence of the up-mixing processing and the digital-to-analog conversion processing is adjustable. The digital baseband signal and the digital medium-frequency signal may be collectively referred to as a digital signal.

The transceiver 1413 may also be referred to as a transceiver unit, a transceiver machine, a transceiver apparatus, or the like. Optionally, a component configured to implement a receiving function in the transceiver unit may be considered as a receiving unit, and a component configured to implement a sending function in the transceiver unit may be considered as a sending unit. In other words, the transceiver unit includes a receiving unit and a sending unit. The receiving unit may also be referred to as a receiver, an input port, a receiving circuit, or the like. The sending unit may be referred to as a transmitter machine, a transmitter, a transmission circuit, or the like.

For example, when the first apparatus, the second apparatus, or the training device in the foregoing embodiments is specifically represented as a base station, the apparatus 1400 shown in FIG. 14 may be used to implement the steps implemented by the base station in the foregoing method embodiments. For a specific implementation in which the apparatus 1400 shown in FIG. 14 performs the foregoing steps, refer to the descriptions in the foregoing method embodiments. Details are not described herein again.

An embodiment of this application further provides a computer-readable storage medium. The computer-readable storage medium stores a program used for signal processing. When the program is run on a computer, the computer is enabled to perform the steps performed by the first apparatus in the methods described in the embodiments shown in FIG. 3 to FIG. 8, or the computer is enabled to perform the steps performed by the second apparatus in the methods described in the embodiments shown in FIG. 3 to FIG. 8, or the computer is enabled to perform the steps performed by the training device in the method described in the embodiment shown in FIG. 9.

An embodiment of this application further provides a computer program product. When the computer program product runs on a computer, the computer is enabled to perform the steps performed by the first apparatus in the methods described in the embodiments shown in FIG. 3 to FIG. 8, or the computer is enabled to perform the steps performed by the second apparatus in the methods described in the embodiments shown in FIG. 3 to FIG. 8, or the computer is enabled to perform the steps performed by the training device in the method described in the embodiment shown in FIG. 9.

The first apparatus, the second apparatus, the training device, the data processing apparatus, or the model training apparatus provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, to enable the chip to perform the data processing method described in the embodiments shown in FIG. 3 to FIG. 8, or enable the chip to perform the model training method described in the embodiment shown in FIG. 9. Optionally, the storage unit is a storage unit in the chip, for example, a register or a cache. Alternatively, the storage unit may be a storage unit that is in the wireless access device and that is outside the chip, for example, a read-only memory (read-only memory, ROM), another type of static storage device that can store static information and instructions, or a random access memory (random access memory, RAM).

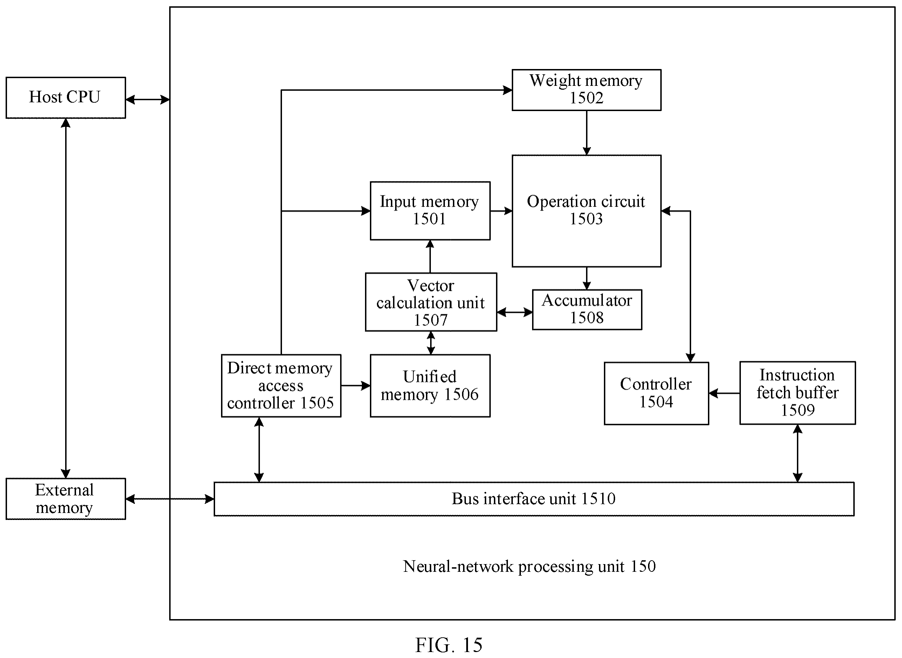

Specifically, refer to FIG. 15. FIG. 15 is a diagram of a structure of a chip according to an embodiment of this application. The chip may be represented as a neural-network processing unit NPU 150. The NPU 150 is mounted to a host CPU (Host CPU) as a coprocessor, and the host CPU allocates a task. A core part of the NPU is an operation circuit 150. The operation circuit 1503 is controlled by a controller 1504 to extract matrix data in a memory and perform a multiplication operation.

In some implementations, the operation circuit 1503 includes a plurality of processing units (Process Engine, PE). In some implementations, the operation circuit 1503 is a two-dimensional systolic array. The operation circuit 1503 may alternatively be a one-dimensional systolic array or another electronic circuit that can perform mathematical operations such as multiplication and addition. In some implementations, the operation circuit 1503 is a general-purpose matrix processor.

For example, it is assumed that there is an input matrix A, a weight matrix B, and an output matrix C. The operation circuit fetches data corresponding to the matrix B from a weight memory 1502, and buffers the data on each PE in the operation circuit. The operation circuit fetches data of the matrix A from an input memory 1501, performs a matrix operation on the data of the matrix A and the matrix B, to obtain a partial result or a final result of the matrix, and stores the result in an accumulator (accumulator) 1508.

A unified memory 1506 is configured to store input data and output data. Weight data is directly transferred to the weight memory 1502 by using a direct memory access controller DMAC (Direct Memory Access Controller, DMAC) 1505. The input data is also transferred to the unified memory 1506 by using the DMAC.

A BIU is a bus interface unit, namely, a bus interface unit 1510, and is used for interaction between an AXI bus and both the DMAC and an instruction fetch buffer (Instruction Fetch Buffer, IFB) 1509.

The bus interface unit (Bus Interface Unit, BIU for short) 1510 is used by the instruction fetch buffer 1509 to obtain instructions from an external memory, and is further used by the direct memory access controller 1505 to obtain original data of the input matrix A or the weight matrix B from the external memory.

The DMAC is mainly configured to transfer input data in the external memory DDR to the unified memory 1506, transfer weight data to the weight memory 1502, or transfer input data to the input memory 1501.

A vector calculation unit 1507 includes a plurality of operation processing units. When necessary, further processing is performed on an output of the operation circuit, such as vector multiplication, vector addition, an exponential operation, a logarithmic operation, and size comparison. The vector calculation unit is mainly configured to perform network calculation at a non-convolutional/fully connected layer in a neural network, for example, batch normalization (batch normalization), pixel-level summation, and upsampling on a feature map.

In some implementations, the vector calculation unit 1507 can store a processed output vector in the unified memory 1506. For example, the vector calculation unit 1507 may apply a linear function and/or a non-linear function to the output of the operation circuit 1503, for example, perform linear interpolation on a feature plane extracted at a convolutional layer, and for another example, accumulate vectors of values to generate an activation value. In some implementations, the vector calculation unit 1507 generates a normalized value, a pixel-level sum, or both. In some implementations, the processed output vector can be used as an activation input of the operation circuit 1503, for example, used at a subsequent layer in the neural network.

The instruction fetch buffer (instruction fetch buffer) 1509 connected to the controller 1504 is configured to store instructions used by the controller 1504.

The unified memory 1506, the input memory 1501, the weight memory 1502, and the instruction fetch buffer 1509 are all on-chip memories. The external memory is private for a hardware architecture of the NPU.

An operation at each layer in a first machine learning model may be performed by the operation circuit 1503 or the vector calculation unit 1507.

The processor mentioned above may be a general-purpose central processing unit, a microprocessor, an ASIC, or one or more integrated circuits configured to control program execution of the method in the first aspect.

In addition, it should be noted that the described apparatus embodiment is merely an example. The units described as separate parts may or may not be physically separate, and parts displayed as units may or may not be physical units, may be located in one place, or may be distributed on a plurality of network units. Some or all of the modules may be selected according to an actual requirement to achieve the objectives of the solutions in the embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by using software in addition to necessary universal hardware, or by using dedicated hardware, including a dedicated integrated circuit, a dedicated CPU, a dedicated memory, a dedicated component, and the like. Generally, any function that is performed by a computer program can be easily implemented by using corresponding hardware. Moreover, a specific hardware structure used to implement a same function may be in various forms, for example, in a form of an analog circuit, a digital circuit, or a dedicated circuit. However, as for this application, a software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods described in embodiments of this application.

All or some of the foregoing embodiments may be implemented by software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

## Claims

**1.** A data processing method, wherein the method comprises:

obtaining a value of T, wherein T is an integer greater than or equal to 1, and T represents a quantity of pieces of subdata comprised in output data of a first machine learning model; and

inputting first data into the first machine learning model to obtain second data generated by the first machine learning model, wherein the second data comprises the T pieces of subdata, the first machine learning model comprises one or more modules, and one piece of subdata is obtained each time a module in the first machine learning model is invoked at least once.

**2.** The method according to claim 1, wherein a function of the first machine learning model comprises any one or combination of the following: encoding, modulation, or reference signal generation.

**3.** The method according to claim 1 or 2, wherein the plurality of modules in the first machine learning model comprise a first module and at least one second module, and inputting the first data into the first machine learning model to obtain the second data output by the first machine learning model comprises:

inputting the first data into the first module to obtain first subdata generated by the first module, wherein the first subdata is one of the T pieces of subdata; and

inputting first feature information into the second module to obtain second subdata generated by the second module, wherein the first feature information comprises feature information generated when a module in the first machine learning model is invoked last time for data processing, the second subdata is one of the T pieces of subdata, and the module in the first machine learning model that is invoked last time is the first module or the second module.

**4.** The method according to claim 1 or 2, wherein the plurality of modules in the first machine learning model comprise a first module and at least one third module, and inputting the first data into the first machine learning model to obtain the second data output by the first machine learning model comprises:

inputting the first data into the first module to generate first subdata by using the first module, wherein the first subdata is one of the T pieces of subdata, and a process of generating the first subdata by using the first module comprises performing feature extraction on the first data; and
invoking the third module a plurality of times to obtain third subdata generated by the third module, wherein the third subdata is one of the T pieces of subdata, an input of the third module comprises feature information of the first data, and the feature information of the first data is updated a plurality of times in a process of invoking the third module a plurality of times.

**5.** The method according to claim 3, wherein inputting the first feature information into the second module to obtain the second subdata generated by the second module comprises:

performing linear transformation on the first feature information by using the second module, and performing processing by using a first activation function, to obtain transformed feature information; and
performing linear transformation on the transformed feature information, and performing processing by using a second activation function, to obtain the second subdata.

**6.** The method according to claim 3, wherein the at least one second module comprises a plurality of second modules, and at least two of the plurality of second modules use different parameters.

**7.** The method according to claim 1 or 2, wherein before inputting the first data into the first machine learning model, the method further comprises:

obtaining to-be-processed data and a value of H, wherein H is an integer greater than or equal to 1, and H represents a length of the first data; and
if a length of the to-be-processed data is less than H, padding the to-be-processed data to obtain the first data, wherein the length of the first data is H.

**8.** The method according to claim 7, wherein the first data comprises the to-be-processed data and padding data, the padding data comprises first identification information, the first identification information is used to identify the value of T and/or a value of K, K is the length of the to-be-processed data, and K is an integer greater than or equal to 1.

**9.** The method according to claim 7, wherein a size of a parameter in the first machine learning model is related to the value of H and a value of G, and G is a length of each piece of subdata.

**10.** The method according to claim 1 or 2, wherein a parameter corresponding to the first machine learning model is carried in one or more of the following information: downlink control information DCI, uplink control information UCI, sidelink control information SCI, radio resource control RRC signaling, or a media access control control element MAC CE; and/or
identification information of the parameter is carried in any one or more of the following information: the DCI, the UCI, the SCI, the RRC signaling, the MAC CE, a physical broadcast channel PBCH, or a physical random access channel PRACH.

**11.** The method according to claim 1 or 2, wherein the method is applied to a side of a first apparatus, a second apparatus is a receiver of the second data, the second apparatus has a plurality of groups of parameters corresponding to the first machine learning model and identification information of each group of parameters, and the method further comprises:
sending second identification information to the second apparatus, wherein the second identification information indicates a group of parameters used in the first machine learning model in the first apparatus.

**12.** A data processing method, wherein the method comprises:

obtaining second data, wherein the second data comprises T pieces of subdata, T is an integer greater than or equal to 1, the second data is generated by a first machine learning model in a first apparatus, the first machine learning model comprises one or more modules, and one piece of subdata is obtained each time a module in the first machine learning model is invoked at least once; and
generating first data based on the second data.

**13.** The method according to claim 12, wherein a parameter corresponding to the first machine learning model is carried in one or more of the following information: downlink control information DCI, uplink control information UCI, sidelink control information SCI, radio resource control RRC signaling, or a media access control control element MAC CE; and/or
identification information of the parameter is carried in any one or more of the following information: the DCI, the UCI, the SCI, the RRC signaling, the MAC CE, a physical broadcast channel PBCH, or a physical random access channel PRACH.

**14.** The method according to claim 12, wherein the method is applied to a side of a second apparatus, the second apparatus has third data, the third data comprises a plurality of groups of parameters corresponding to the first machine learning model and identification information of each group of parameters, and the method further comprises:

receiving second identification information sent by the first apparatus; and
determining, based on the second identification information and the third data, a group of parameters used in the first machine learning model in the first apparatus; and
generating the first data based on the second data comprises:
generating the first data based on the group of parameters used in the first machine learning model in the first apparatus and the second data.

**15.** A model training method, wherein the method comprises:

obtaining training data from a training data set, wherein the training data is used to obtain first data and a value of T, T is an integer greater than or equal to 1, and values of T comprised in at least two pieces of training data in the training data set are different;
inputting the first data into the first machine learning model to obtain second data generated by the first machine learning model, wherein the second data comprises the T pieces of subdata, the first machine learning model comprises a plurality of modules, and one piece of subdata generated by a module in the first machine learning model is obtained each time the module is invoked at least once; and
training the first machine learning model based on the second data and a loss function, to obtain a trained first machine learning model.

**16.** The method according to claim 15, wherein a function of the first machine learning model comprises any one or combination of the following: encoding, modulation, or reference signal generation.

**17.** The method according to claim 15 or 16, wherein the plurality of modules in the first machine learning model comprise a first module and at least one second module, and inputting the first data into the first machine learning model to obtain the second data output by the first machine learning model comprises:

inputting the first data into the first module to obtain first subdata generated by the first module, wherein the first subdata is one of the T pieces of subdata; and
inputting first feature information into the second module to obtain second subdata generated by the second module, wherein the first feature information comprises feature information generated when a module in the first machine learning model is invoked last time for data processing, the second subdata is one of the T pieces of subdata, and the module in the first machine learning model that is invoked last time is the first module or the second module.

**18.** The method according to claim 15 or 16, wherein before inputting the first data into the first machine learning model, the method further comprises:

obtaining to-be-processed data from the training data;
obtaining a value of H, wherein H is an integer greater than or equal to 1, and H represents a length of the first data;

and
if a length of the to-be-processed data is less than H, padding the to-be-processed data to obtain the first data, wherein the length of the first data is H.

**19.** The method according to claim 18, wherein when the function of the first machine learning model comprises encoding and/or modulation, the second data is used to determine a to-be-sent signal, and training the first machine learning model based on the second data and the loss function comprises:

demodulating and/or decoding a received signal corresponding to the to-be-sent signal to obtain estimated data corresponding to the to-be-processed data; and
training the first machine learning model based on the estimated data and the loss function, wherein the loss function indicates a similarity between the estimated data and the to-be-processed data.

**20.** The method according to claim 15 or 16, wherein when the second data is a reference signal, training the first machine learning model based on the second data and the loss function comprises:

generating predicted channel information based on a received reference signal corresponding to the reference signal; and
training the first machine learning model based on the loss function, wherein the loss function indicates a similarity between the predicted channel information and correct channel information.

**21.** A data processing apparatus, wherein the data processing apparatus comprises a processing module and a transceiver module; and
the processing module is configured to perform a processing operation according to any one of claims 1 to 11, and the transceiver module is configured to perform receiving and sending operations according to any one of claims 1 to 11.

**22.** A data processing apparatus, wherein the data processing apparatus comprises a processing module and a transceiver module; and
the processing module is configured to perform a processing operation according to any one of claims 12 to 14, and the transceiver module is configured to perform receiving and sending operations according to any one of claims 12 to 14.

**23.** A model training apparatus, wherein the data processing apparatus comprises a processing module, and the processing module is configured to perform a processing operation according to any one of claims 15 to 20.

**24.** A communication system, wherein the communication system comprises the data processing apparatus according to claim 21 and the data processing apparatus according to claim 22.

**25.** The system according to claim 24, wherein the communication system further comprises the model training apparatus according to claim 23.

**26.** An apparatus, wherein the apparatus comprises at least one processor, the at least one processor is coupled to a memory, and the memory is configured to store a program or instructions; and
the at least one processor is configured to execute the program or the instructions, to enable the apparatus to implement the method according to any one of claims 1 to 11, or implement the method according to any one of claims 12 to 14, or implement the method according to any one of claims 15 to 20.

**27.** A computer-readable storage medium, wherein the readable storage medium stores instructions, and when the instructions are executed by a computer, the method according to any one of claims 1 to 11 is performed; or the method according to any one of claims 12 to 14 is performed; or the method according to any one of claims 15 to 20 is performed.

**28.** A computer program product, wherein the computer program product comprises instructions, and when the instructions are run on a computer, the method according to any one of claims 1 to 11 is performed; or the method according to any one of claims 12 to 14 is performed; or the method according to any one of claims 15 to 20 is performed.

Network device 101
Mobile station 102

FIG. 1

FIG. 2

A first apparatus obtains a value of T, where T is an integer greater than or equal to 1, and T represents a quantity of pieces of subdata included in output data of a first machine learning model

301

The first apparatus inputs first data into the first machine learning model to obtain second data generated by the first machine learning model, where the second data includes the T pieces of subdata, the first machine learning model includes one or more modules, and one of the T pieces of subdata is obtained each time a module in the first machine learning model is invoked at least once

302

FIG. 3

First apparatus

Second apparatus

401: Obtain a group of parameters used in a first machine learning model

402: Obtain a value of T, where T is an integer greater than or equal to 1, and T represents a quantity of pieces of subdata included in output data of the first machine learning model

403: Obtain to-be-processed data

404: Determine whether a length of the to-be-processed data is less than H; and if a determining result is that the length of the to-be-processed data is less than H, proceed to step 405; or if a determining result is that the length of the to-be-processed data is not less than H, proceed to step 406, where H represents a length of first data

405: Pad the to-be-processed data to obtain the first data, where the length of the first data is H

406: Fuse first identification information and the to-be-processed data to obtain the first data, where the first identification information is used to identify the value of T and/or a value of K, K is the length of the to-be-processed data, and K is an integer greater than or equal to 1

407: Input the first data into the first machine learning model to obtain second data generated by the first machine learning model, where the second data includes the T pieces of subdata, the first machine learning model includes one or more modules, and one piece of subdata is obtained each time a module in the first machine learning model is invoked at least once

408: Determine a to-be-sent signal based on the second data

409: To-be-sent signal

410: Obtain the second data, where the second data includes the T pieces of subdata, T is an integer greater than or equal to 1, the second data is generated by the first machine learning model in the first apparatus, the first machine learning model includes the one or more modules, and one piece of subdata is obtained each time the module in the first machine learning model is invoked at least once

411: Generate the first data based on the second data

FIG. 4

First apparatus
Second apparatus
501: A plurality of groups of parameters of a first machine learning model and identification information of each group of parameters
502: Second identification information
503: Determine, based on a second identifier and third data, a group of parameters used in the first machine learning model in the first apparatus, where the third data includes the plurality of groups of parameters of the first machine learning model and the identification information of each group of parameters

FIG. 5

First apparatus
Base station
601: UCI, where the UCI carries second identification information
602: Obtain a group of parameters to which the second identification information points, that is, a group of parameters used in a first machine learning model
603: Obtain DUI, where the DUI carries the group of parameters to which the second identification information points and indication information corresponding to the group of parameters, and the indication information corresponding to the group of parameters indicates positions, in the first machine learning model, of a plurality of parameters included in the group of parameters
604: DUI

FIG. 6

First identification information
0 for padding
To-be-processed data
First data

FIG. 7

First identification information
Padding data
To-be-processed data
Perform linear transformation, and perform processing by using a third activation function
$s_0$
Perform linear transformation
$o_0$
First subdata
$s_0$
Perform linear transformation, and perform processing by using a first activation function
$s_1$
Perform linear transformation
$o_1$
Second subdata
$s_1$
...
$s_{t-1}$
Perform linear transformation, and perform processing by using the first activation function
$s_t$
Perform linear transformation
$o_t$
Second subdata
$s_t$

FIG. 8

Obtain training data from a training data set, where the training data is used to obtain first data and a value of T, T is an integer greater than or equal to 1, and values of T included in at least two pieces of training data in the training data set are different
901
Input the first data into a first machine learning model to obtain second data generated by the first machine learning model, where the second data includes T pieces of subdata, the first machine learning model includes a plurality of modules, and one piece of subdata generated by a module in the first machine learning model is obtained each time the module is invoked at least once
902
Train the first machine learning model based on the second data and a loss function, to obtain a trained first machine learning model
903

FIG. 9

1000
Data processing apparatus
Processing module 1001
Transceiver module 1002

FIG. 10

1100
Data processing apparatus
Processing module 1101
Transceiver module 1102

FIG. 11

1200
Model training apparatus
Processing module 1201

FIG. 12

1300
Apparatus
1302
1301
Communication port
Processor
1304
1303
Memory

FIG. 13

1415
1413
Processor
Tx
1411
1414
Rx
Memory
Network interface
Apparatus 1400
1412

FIG. 14

Weight memory 1502
Operation circuit 1503
Accumulator 1508
Controller 1504
Instruction fetch buffer 1509
Input memory 1501
Vector calculation unit 1507
Unified memory 1506
Direct memory access controller 1505
Bus interface unit 1510
Neural-network processing unit 150
Host CPU
External memory

FIG. 15

## INTERNATIONAL SEARCH REPORT

International application No.
**PCT/CN2023/085467**

**A. CLASSIFICATION OF SUBJECT MATTER**

G06N 20/00(2019.01)i

According to International Patent Classification (IPC) or to both national classification and IPC

**B. FIELDS SEARCHED**

Minimum documentation searched (classification system followed by classification symbols)

IPC: G06N,G06F,H04L,H04W

Documentation searched other than minimum documentation to the extent that such documents are included in the fields searched

Electronic data base consulted during the international search (name of data base and, where practicable, search terms used)

CNTXT, ENTXTC, WPABSC, 3GPP, CNKI, IEEE: 分组数据, 华为, 机器学习, 模型, 输出, 数据分组, 数据组, 训练, 子数据, 参数, machine learning, model, training, sub, group, output, parameter

**C. DOCUMENTS CONSIDERED TO BE RELEVANT**

| Category* | Citation of document, with indication, where appropriate, of the relevant passages | Relevant to claim No. |
|---|---|---|
| A | US 2019095785 A1 (AMAZON TECHNOLOGIES, INC.) 28 March 2019 (2019-03-28) description, paragraphs 10-61 | 1-28 |
| A | CN 113408208 A (CHENGDU OPPO COMMUNICATION TECHNOLOGY CO., LTD.) 17 September 2021 (2021-09-17) entire document | 1-28 |
| A | CN 114418129 A (SUZHOU INSPUR INTELLIGENT TECHNOLOGY CO., LTD.) 29 April 2022 (2022-04-29) entire document | 1-28 |
| A | CN 115470929 A (SANY HEAVY MACHINERY CO., LTD.) 13 December 2022 (2022-12-13) entire document | 1-28 |
| A | WO 2022127867 A1 (TELEFONAKTIEBOLAGET LM ERICSSON (PUBL) et al.) 23 June 2022 (2022-06-23) entire document | 1-28 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **14 June 2023** | **23 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

INTERNATIONAL SEARCH REPORT

International application No.
**PCT/CN2023/085467**

**C. DOCUMENTS CONSIDERED TO BE RELEVANT**

| Category* | Citation of document, with indication, where appropriate, of the relevant passages | Relevant to claim No. |
|---|---|---|
| A | WO 2023036309 A1 (VIVO MOBILE COMMUNICATION CO., LTD.) 16 March 2023 (2023-03-16)<br>entire document | 1-28 |

Form PCT/ISA/210 (second sheet) (July 2022)

**INTERNATIONAL SEARCH REPORT**
**Information on patent family members**

International application No.
**PCT/CN2023/085467**

| Patent document cited in search report | Publication date (day/month/year) | Patent family member(s) | Publication date (day/month/year) |
|---|---|---|---|
| US 2019095785 A1 | 28 March 2019 | WO 2019067374 A1 | 04 April 2019 |
| CN 113408208 A | 17 September 2021 | None | |
| CN 114418129 A | 29 April 2022 | None | |
| CN 115470929 A | 13 December 2022 | None | |
| WO 2022127867 A1 | 23 June 2022 | None | |
| WO 2023036309 A1 | 16 March 2023 | None | |

Form PCT/ISA/210 (patent family annex) (July 2022)